# EUROPEAN PATENT APPLICATION

(11) **EP 4 678 464 A1**
(43) Date of publication of application: **14.01.2026**
(21) Application number: 24771147.6
(22) Date of filing: 11.03.2024
(51) Int. Cl.: B60L 53/30, G01S 13/02, H04W 84/12, H04W 76/14, H04W 8/00, B60L 53/66, B60L 53/65, B60L 53/126

(54) **PAIRING, POSITIONING, AND COMMUNICATING METHOD AND APPARATUS FOR CHARGING ELECTRIC VEHICLE**

(30) Priority: 10.03.2023 KR 20230032101; 03.04.2023 KR 20230043747; 18.04.2023 KR 20230050869
(71) Applicant: Hyundai Motor Company, Seoul 06797 (KR); Kia Corporation, Seocho-gu Seoul 06797 (KR); Myongji University Industry and Academia Cooperation Foundation, Gyeonggi-do 17058 (KR)
(72) Inventor: SEONG, Jae Yong, Hwaseong-si, Gyeonggi-do 18280 (KR); SHIN, Min Ho, Yongin-si, Gyeonggi-do 17058 (KR)
(74) Representative: Isarpatent
(86) International application number: PCT/KR2024/003096
(87) International publication number: WO 2024/191148

(57) **Abstract**

A charging communication method for charging an electric mobility, according to the present disclosure, comprises the steps of: discovering, by an EVCC, a first electric vehicle supply equipment (EVSE) within a range by using a first communication technology; obtaining, by the EVCC, information for positioning the electric mobility to a charging location for being supplied with power from the first EVSE by using the first communication technology; and performing, by the EVCC, a communication connection with a supply equipment communication controller (SECC) of the first EVSE, by using a second communication technology.

## Description

### [Technical Field]

The present disclosure relates to a charging communication technology of an electric vehicle (EV, Electric Vehicle) with an automatic connection device (ACD), and more particularly, to a communication technology using a wireless local area network (WLAN) and ultra-wide band (UWB) technology.

### [Background Art]

The content described in this section merely provides background information on the exemplary embodiments and does not constitute prior art.

Recently developed electric vehicles (EVs) operate by driving a motor using power from a battery. Compared to conventional gasoline engine vehicles, electric vehicles generate fewer air pollutants such as exhaust gases and noise, have fewer failures, offer longer lifespans, and are simpler to operate.

Electric vehicles are classified according to their driving sources into hybrid electric vehicles (HEVs), plug-in hybrid electric vehicles (PHEVs), and electric vehicles (EVs). An HEV includes an engine as a main power source and a motor as an auxiliary power source. A PHEV includes a motor as a main power source and an engine that is used when the battery is discharged. An EV includes a motor but does not include an engine.

An electric vehicle charging system may be defined as a system for charging a battery mounted on an electric vehicle using power from a power grid or an energy storage device. Such electric vehicle charging systems may take various forms depending on the type of electric vehicle. For example, the electric vehicle charging system may include a conductive charging system using a cable or a contactless wireless power transmission system.

When charging an electric vehicle, a vehicle assembly (VA) mounted on the electric vehicle forms an inductive resonant coupling with a transmission pad of a ground assembly (GA) located at a charge station or charging spots, and the battery of the electric vehicle may be charged using power transmitted from the ground assembly through the inductive resonant coupling.

During electric vehicle charging, a robot arm or manipulator may be used to supply power from an electric vehicle supply equipment (EVSE) to a charging door or a charging port of the electric vehicle.

In this case, considering the various types of electric vehicle charging door/ports, the various types of electric vehicle supply equipment, and various charging methods, it is necessary to define a procedure for positioning between the electric vehicle and the manipulator and for a preparatory phase for power supply.

A message sequence between a power grid and an electric vehicle (EV) is predefined and performed in the form of exchanging pairs of request messages and response messages between a supply equipment communication controller (SECC) located on the grid side and an electric vehicle communication controller (EVCC) mounted on the electric vehicle.

Electric vehicles typically charge their batteries using charging methods such as automatic connection devices or wireless power transmission, or using alternating current charging or direct current charging. For battery charging, the electric vehicle exchanges messages with the SECC, which are related to session setup, vehicle positioning setup, vehicle positioning, pairing, authentication/authorization setup, authentication/authorization, service discovery, service detail, service selection, and so on.

For example, when the electric vehicle fails to find a compatible method for positioning or pairing for an automatic connection device or wireless power transmission after receiving a vehicle positioning setup response message, the electric vehicle may transition to a service discovery state through service renegotiation from a session stop state.

However, in related standards (e.g., ISO 15118) or conventional technologies, the protocol for an automatic connection device pantograph (ACDP) for message sequencing between the electric vehicle and the grid is insufficient, requires modification of message parameters, and accordingly, requires modification of the message sequence. In addition, in related standards or conventional technologies, it is necessary to separately define vendor specific element (VSE) additional information parameters for an automatic connection device underbody (ACDU) or an automatic connection device sidearm (ACDS).

### [Disclosure]

### [Technical Problem]

An object of the present disclosure is to provide an improved charging communication method and apparatus based on ISO 15118 for an ACD using a wireless local area network (WLAN) and ultra-wide band (UWB).

One of the objects of the present disclosure is to provide an improved charging communication method and apparatus that enables an electric vehicle to discover a power supply device or electric vehicle supply equipment (EVSE), to obtain location information and/or information for positioning using a communication technology specialized for short-range communication, and to perform charging preparation and a charging process using a communication technology with various functions after the electric vehicle is positioned at a location where charging is possible.

Although various communication technologies may be used, each communication technology has strengths and weaknesses, and the selective application of communication technologies capable of performing more effective roles in various procedures of the electric vehicle charging process is proposed by the present disclosure.

In this process, in consideration of various types of electric vehicle charging door/ports, various types of electric vehicle supply equipment, and various charging methods when supplying power from the power supply device or EVSE to the electric vehicle, message types and data formats may be proposed so that a procedure for positioning between the electric vehicle and a charging manipulator and for a preparatory phase for power supply may be performed.

### [Technical Solution]

A charging communication method performed between a Supply Equipment Communication Controller (SECC) and an Electric Vehicle Communication Controller (EVCC) according to embodiments of the present disclosure for achieving the above objective may be a charging communication method performed between the SECC, which is associated with a primary assembly for transmitting power to an electric vehicle, and the EVCC, which is mounted on the electric vehicle and associated with a secondary assembly for being supplied with power from the primary assembly.

A charging communication method for charging an electric mobility according to exemplary embodiments, which is performed by an electric vehicle communication controller (EVCC), the charging communication method may comprise discovering, by the EVCC, a first Electric Vehicle Supply Equipment (EVSE) within a range, using a first communication technology; obtaining, by the EVCC, information for positioning the electric mobility to a charging position/location for being supplied with electric power from the first EVSE, using the first communication technology; and establishing (or performing), by the EVCC, a communication connection (or communication channel or link) with a Supply Equipment Communication Controller (SECC) of the first EVSE, using a second communication technology.

The discovering of the first EVSE by the EVCC using the first communication technology may comprise broadcasting, by the EVCC, a probe request message, using the first communication technology; and receiving, by the EVCC, at least one probe response message transmitted from at least one EVSE within the range, using the first communication technology.

The discovering of the first EVSE by the EVCC using the first communication technology may further comprise measuring, by the EVCC, at least one distance to each of the at least one EVSE within the range, based on the probe response message; and selecting the first EVSE that is closest to the electric mobility from among the at least one EVSE within the range, based on the at least one measured distance.

The charging communication method for charging an electric mobility may further comprise transmitting a connection request message to the discovered first EVSE, using the first communication technology; and receiving a connection response message corresponding to the connection request message from the first EVSE, using the first communication technology.

The connection request message may comprise location/position information of an inlet of the electric mobility, and the connection response message may comprise mating space information of the first EVSE or localization parameters of the first EVSE.

The charging communication method for charging an electric mobility may further comprise fine positioning the electric mobility to a charging position/location to be mated with the first EVSE.

The obtaining of the information for positioning the electric mobility to the charging position/location may comprise measuring distances to each of a plurality of localization anchors associated with the first EVSE; and precisely measuring a distance and a direction between a charging port of the first EVSE and a charging port inlet of the electric mobility based on the distances to the plurality of localization anchors.

After obtaining the information for positioning the electric mobility to the charging position/location, the charging communication method for charging an electric mobility may further comprise transmitting, by the EVCC, a pairing request message to the first EVSE; and receiving a pairing response message from the first EVSE.

The pairing request message may comprise EVMAC (Electric Vehicle Medium Access Layer) information of the electric mobility or identification information of the EVCC, and the pairing response message may comprise a channel number (CH#) of a wireless LAN access point (AP), basic service set identification (BSSID), or identification information of the EVSE (EVSEID).

The first communication technology may be one of UWB, RFID, NFC, or IrDA.

Identification information obtained through a pairing process performed with the discovered first EVSE using the first communication technology may be delivered to a wireless communication layer using the second communication technology.

An electric vehicle communication controller (EVCC), which is disposed in an electric mobility and associated with a secondary assembly that receives power from a primary assembly, may comprise a processor configured to execute at least one instruction.

The processor of the EVCC may discover, a first electric vehicle supply equipment (EVSE) within a range, using a first communication technology; obtain, information for positioning the electric mobility to a charging position/location for being supplied with power from the first EVSE, using the first communication technology; and establish (or perform), a communication connection (or communication channel or communication link) with a supply equipment communication controller (SECC) of the first EVSE, using a second communication technology.

When discovering the first EVSE using the first communication technology, the processor may further broadcast a probe request message using the first communication technology, and receive at least one probe response message transmitted from at least one EVSE within the range, using the first communication technology.

The processor may further measure, at least one distance from the electric mobility to each of the at least one EVSE within the range, based on the probe response message; and select, the first EVSE that is closest to the electric mobility from among the at least one EVSE within the range, based on the at least one measured distance.

The processor may further transmit a connection request message to the discovered first EVSE using the first communication technology; and receive, a connection response message corresponding to the connection request message from the first EVSE, using the first communication technology.

When obtaining the information for positioning the electric mobility to the charging position/location, the processor may further measure distances to each of a plurality of localization anchors associated with the first EVSE, and precisely measure a distance and a direction between a charging port of the first EVSE and a charging port inlet of the electric mobility, based on the distances to the plurality of localization anchors.

A charging communication method for charging an electric mobility , which is performed by a supply equipment communication controller (SECC) associated with a primary assembly that transmits power to an electric mobility, may comprise receiving a probe request message broadcast using a first communication technology from the electric mobility; transmitting a probe response message to the electric mobility in response to the probe request message, using the first communication technology; providing information for positioning the electric mobility to a charging position/location for being supplied with power from the primary assembly to the electric mobility, using the first communication technology; and establishing a communication connection with the electric mobility to engage in a charging process, using a second communication technology.

The charging communication method for charging an electric mobility may further comprise receiving a connection request message including location information of an inlet of the electric mobility from the electric mobility, using the first communication technology; and transmitting a connection response message including mating space information of the primary assembly or localization parameters associated with the primary assembly to the electric mobility, using the first communication technology.

The providing of the information for positioning the electric mobility to the charging position/location may comprise providing location information of each of a plurality of localization anchors associated with the primary assembly to the electric mobility to enable the electric mobility to obtain fine positioning information to reach the charging position/location capable of mating (at which mating is possible).

After the electric mobility is positioned at the charging position/location, the charging communication method for charging an electric mobility may further comprise performing, using the first communication technology, a pairing process between the electric mobility and the primary assembly based on identification information of the electric mobility, service identification information associated with the primary assembly, or communication service identification information of the primary assembly using the second communication technology.

The first communication technology may be one of UWB, RFID, NFC, or IrDA.

The establishing of the communication connection with the electric mobility to engage in a charging process, using a second communication technology may be performed based on identification information obtained through the pairing process using the first communication technology.

### [Advantageous Effects]

According to exemplary embodiments of the present disclosure, the performance of electric vehicle charging communication may be improved, and user convenience may be enhanced.

According to exemplary embodiments of the present disclosure, in a charging communication method for electric vehicle charging, communication between the electric vehicle/EVCC and the electric vehicle supply equipment (EVSE)/SECC, as well as various procedures of the charging process between a primary assembly and a secondary assembly, may be performed more effectively by using two or more different communication schemes.

According to exemplary embodiments of the present disclosure, in consideration of various types of electric vehicle charging door/ports, various types of electric vehicle supply equipment, and various charging methods when supplying power from a power supply device or electric vehicle supply equipment (EVSE) to the electric vehicle, effective message types and data formats may be provided so that a procedure for positioning between the electric vehicle and a charging manipulator and a procedure for a preparatory phase for power supply may be performed.

### [Description of Drawings]

FIG. 1 is a conceptual diagram illustrating an architecture in which charging communication for electric vehicle charging is performed according to exemplary embodiments of the present disclosure.
FIG. 2 is a conceptual diagram illustrating a protocol of a charging communication technology using wireless local area network (WLAN) and ultra-wide band (UWB) communication that may be employed in the architecture of FIG. 1 according to exemplary embodiments of the present disclosure.
FIG. 3 is a conceptual diagram illustrating entities participating in charging communication according to exemplary embodiments of the present disclosure.
FIG. 4 is a conceptual diagram illustrating detailed protocols of the charging communication technology according to exemplary embodiments of the present disclosure.
FIG. 5 is a conceptual diagram illustrating protocols of a discovery and connection process of the charging communication technology according to exemplary embodiments of the present disclosure.
FIG. 6 is a conceptual diagram illustrating protocols of a fine positioning and pairing process of the charging communication technology according to exemplary embodiments of the present disclosure.
FIG. 7 is a conceptual diagram illustrating protocols of a wireless LAN connection process of the charging communication technology according to exemplary embodiments of the present disclosure.
FIG. 8 is a conceptual diagram illustrating VSEs of the SECC and EVCC that may be employed in a discovery and connection session according to exemplary embodiments of the present disclosure.
FIG. 9 is a conceptual diagram illustrating energy transfer type (ETT) settings that may be employed in a discovery and connection session according to exemplary embodiments of the present disclosure.
FIG. 10 is a conceptual diagram illustrating proposed changes of ACD ETT based on ISO 15118-8, which is applicable to an ACD charging communication method according to exemplary embodiments of the present disclosure.
FIG. 11 and FIG. 12 are conceptual diagrams illustrating proposed changes of a service discovery protocol (SDP) applicable to an ACD charging communication method according to exemplary embodiments of the present disclosure.
FIG. 13 is a conceptual diagram illustrating a proposed new service ID applicable to a service discovery session according to exemplary embodiments of the present disclosure.
FIG. 14 is a conceptual diagram illustrating proposed configuration parameters of a DC-ACDS service applicable to a service detail format according to exemplary embodiments of the present disclosure.
FIG. 15 is a conceptual diagram illustrating a remaining portion of the process of FIG. 2 in more detail according to exemplary embodiments of the present disclosure.
FIG. 16 is a conceptual block diagram illustrating an internal structure of a computing system that may implement a generalized ACD, a communication/communication control device included in the ACD, an SECC, an EVCC, a wireless LAN access point (AP) deployed for the EVSE, and a short-range communication device deployed in the electric vehicle or the ACD, as a charging communication apparatus for an ACD according to exemplary embodiments of the present disclosure.

### [Best mode of the Invention]

For a clearer understanding of the features and advantages of the present disclosure, exemplary embodiments of the present disclosure will be described in detail with reference to the accompanying drawings.

However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, technologies that use mobile communication techniques such as Wi-Fi or 5G, but operate on a single-layer communication protocol to perform pre-charging procedures such as setup, association, pairing, localization, positioning, and docking/undocking control for electric vehicle (EV) charging, or to transmit and receive information necessary for performing each of these processes, may utilize prior art technologies disclosed before the filing of the present disclosure. At least some of these known technologies may be applied as technical components necessary for implementing the present invention.

However, it is not the intention of the present disclosure to claim rights over such prior art, and the content of the prior art may be included as part of the present disclosure to the extent that it does not depart from the spirit of the disclosure.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC) or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted on the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted on the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"OEM (original equipment manufacturer)" may include an electric vehicle manufacturer or a server operated by the electric vehicle manufacturer, and may further include a root certificate authority (CA) or a root certificate server that issues OEM root certificates.

"Charging Station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charging station (CS)" may refer to a facility that includes one or more EV power supply devices and actually performs charging for electric vehicles (EVs).

"Charging station" may include at least one ground assembly and at least one ground assembly controller that manages the ground assembly. The ground assembly may include at least one wireless communicator. "Charging station" may refer to a location, such as a home, office, public space, roadside, or parking lot, that includes at least one ground assembly.

"Charging Station Operator (CSO)": An entity that manages electricity to provide the requested energy transfer service, and may be synonymous with "Charge Point Operator (CPO)".

"Charge Service Provider (CSP)": An entity responsible for managing and authenticating EV user credentials, billing, and providing other value-added services to customers, and can be considered a specific type of Mobility Operator (MO) and may also be implemented as an integrated entity with an MO.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

"Mobility Operator (MO)": A service provider that enters into contractual relationships with electric vehicle (EV) owners concerning charging, authorization, and payment, enabling EV drivers to charge their vehicles at charging stations.

"Clearing House (CH)": An entity that handles cooperation among MOs, Charging Service Providers (CSPs), and Charging Station Operators (CSOs), and in particular, may serve as an intermediary that facilitates authorization, billing, and settlement procedures related to EV charging service roaming between two settlement parties.

"Roaming": A scheme and the associated exchange of information and provisions that allow EV users to access charging services provided by multiple CSPs or CSOs across different mobility networks using a single credential and contractual agreement.

"Credential": A physical or digital asset representing the personal identity of an EV or its owner, and may include cryptographic information used to verify identity, such as passwords, public/private key pairs used in public-key cryptographic algorithms, public key certificates issued by a certification authority, and information related to a trusted root certification authority.

"Certificate": An electronic document that binds a public key to an identity through a digital signature.

"Service Session": A set of EV charging services at a charging point, assigned to a customer within a defined timeframe and identified by a unique identifier.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (EMAID)": A single contractual certificate issued for each legal contract concluded between the mobility operator and a customer for the electric vehicle charging.

"E-Mobility Account Identifier (EMAID)" may refer to a unique contract certificate issued for each legal agreement concluded between a mobility operator and a customer for electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

The V2G communication interface and the ISO 15118 standard may be intended to activate a user-friendly mechanism to perform the authentication, authorization, and payment without requiring additional user interaction at the charging station.

Electric vehicles may be integrated into the smart grid to provide a flexible load control and valuable grid services without compromising driver habits. In order to avoid the need for additional grid components to supply power to peak power demands arising from highly variable load fluctuations, the energy of the electric vehicles may be considered as one of the energy sources in the smart grid. In addition, it may be considered to provide appropriate incentives to electric vehicles for the expansion of the smart grid, so that the smart grid may encourage the generation and use of the renewable energy in the long term.

A Vehicle-to-Grid Transfer Protocol (V2GTP) of the OSI 5 layer may be basically understood as a session wrapper for application layer messages. The application layer messages at this time may be referred to as so-called V2G messages. The V2GTP may include definitions on a header and a payload to enable an efficient classification and processing of the V2G messages.

An autoconnect charging device or automatic charging device (ACD) may be implemented based on contents specified in ISO/IEC 15118 Edition 2 or ISO 15118-20 to perform at least a part of a charging process by controlling a robot or an automated device through wireless communications.

Several types of ACD technologies including an ACD of underbody connection type (ACD-U), an ACD of sidearm connection type (ACD-S), and an ACD of pantograph (ACD-P) type have been proposed based on a direction in which the ACD equipment on the EVSE side approaches the electric vehicle and/or a location of the ACD equipment on the EVSE side with respect to the electric vehicle, and additional ACD types may be included in the future as the wired or wireless charging technologies advances.

An ACD charging communication method described hereinbelow may be configured to define a new namespace, change message parameters, change a message sequence, and utilize docking, undocking, and pairing mechanisms in ACD charging communications over a wireless LAN (WLAN) according to ISO 15118 standard. In addition, the ACD charging communication method may be configured to define a VSE additional information parameter for the ACD-U or the ACD-S.

"Vendor specific element (VSE)" may refer to a data format that contains information on a type of an EVSE available at a current location in ISO 15118-based communications.

Hereinafter, exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

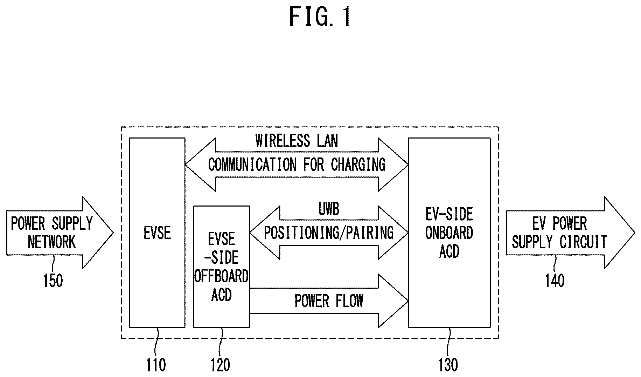

Hereinafter, detailed aspects of the present disclosure will be described through exemplary embodiments illustrated in FIGS. 1 to 16.

FIG. 1 is a conceptual diagram illustrating an architecture in which charging communication for electric vehicle charging is performed according to exemplary embodiments of the present disclosure.

In FIG. 1, for the sake of convenience in explanation, the term "electric vehicle" is used; however, the present disclosure may be applied to various types of electric mobility that are capable of traveling using electric energy. In this case, the term "electric mobility" may refer not only to mobility operating solely on electric energy, but also to various types of hybrid electric mobility that may utilize other energy sources in conjunction with electric energy.

Even when targeting various types of electric mobility, it is customary for terms such as EVSE to refer to a device that supplies electric energy, and for terms such as EVCC to refer to a controller that performs electronic communication and control within the electric mobility.

As shown in FIG. 1, in an exemplary embodiment, WLAN is used for charging communication between an electric vehicle supply equipment (EVSE) 110 and an EV-side onboard ACD 130 mounted on the electric vehicle, and a second communication technology such as UWB is used between an EVSE-side offboard ACD 120 connected to an EVSE 110 and the EV-side onboard ACD 130 for ACD control communication.

Electric power is supplied to the EVSE 110 from a power supply network 150, and electric power is delivered from the EV-side onboard ACD 130 on the electric vehicle to an EV power supply circuit 140.

The electric power supplied to the EVSE-side offboard ACD 120 of the primary side is delivered to the EV-side onboard ACD 130 of the secondary assembly. For electric power to be supplied from the primary assembly to the secondary assembly, a docking process between the primary assembly and the secondary assembly is required, and after electric power is supplied, an undocking process is performed to separate the primary assembly and the secondary assembly.

For example, when the primary assembly and the secondary assembly are ACDSs, a level-1 approach may be proposed.

For control communication between ACDs or between the EVSE electric mobilities for operations based on location information such as positioning and pairing of the electric vehicle or electric mobility, UWB, BLE, or other short-range communication technologies may be used. During the charging process, communication technologies defined in ISO 15118-2 and/or ISO 15118-20 may be used. These communication technologies may include PLC technology.

An advantage of the level-1 approach is that the level-1 approach allows reuse of existing charging communication protocols (for example, after docking).

A disadvantage of the level-1 approach is that a complex design is required to harmonize different protocols for the same session, and additional pairing between the two channels may be necessary. For example, on the EV side, it is necessary to confirm that the SECC connected via the UWB channel and the SECC connected via the PLC channel are the same. Furthermore, different methods may need to be implemented in similar charging modes. In order that UWB+PLC technology is implemented for the ACDU and WLAN technology is implemented for the ACDS, additional design effort is required. Authentication between the EVCC and the SECC must also be redundantly performed. For example, separate authentication may be required for the PLC connection and the UWB connection.

To address this, the present disclosure may employ level-2 communication technology as proposed in ISO 15118-20. In ACDS/U communication, WLAN may sufficiently perform the role. UWB may play a major role in vehicle positioning and pairing.

In an exemplary embodiment of the present disclosure, WLAN and UWB may be used together in a modified version of ISO 15118 (-20 & -8). In addition to UWB, short-range communication technologies such as BLE, RFID, or irDA may also be used.

WLAN may be suitable for complex data communication (TCP/IP/TLS/XML). UWB may be more advantageous than WLAN for pairing and positioning due to distance detection capability (ranging). Accordingly, in an exemplary embodiment of the present disclosure, WLAN may be used as the main channel for most sessions, excluding the pairing and positioning processes, and a discovery process that is preliminary process of the paring and the positioning process. UWB may be used for vehicle positioning and, if necessary, for pairing. Additionally, UWB may be secondarily utilized for docking, undocking, and ACD-related error detection or handling. It will be apparent to those skilled in the art that short-range communication schemes with similar characteristics to UWB may be used instead of UWB in other embodiments of the present disclosure. Examples include BLE, RFID, irDA, or NFC communication schemes.

For modifications such as the embodiments described below in the present disclosure, ACDS/U parameters related to the VSE (Vendor Specific Element) and/or additional info in ISO 15118-8 may be proposed for revision. In ISO 15118-20, message parameters, message sequences, additional namespaces, and requirements may be changed or additionally proposed.

According to exemplary embodiments of the present disclosure, a charging communication method for an ACD may be provided that defines a new namespace, changes message parameters, changes message sequences, and uses a docking-undocking-pairing mechanism.

According to exemplary embodiments of the present disclosure, a charging communication method for an ACD may be provided that defines VSE additional information parameters for ACDP, ACDU, or ACDS.

According to exemplary embodiments of the present disclosure, a charging communication method for an ACD may be provided that uses docking-undocking means utilizing robotics (a manipulator or robot arm).

According to exemplary embodiments of the present disclosure, a charging communication method for an ACD may be provided that may perform communication between the electric vehicle/EVCC and the electric vehicle supply equipment (EVSE)/SECC, and various procedures in the charging process between the primary assembly and the secondary assembly, more effectively using two or more different communication schemes.

Although various communication technologies may be used, each communication technology has strengths and weaknesses, and the selective application of communication technologies that may more effectively perform roles in various procedures of the electric vehicle charging process is proposed by the present disclosure.

According to exemplary embodiments of the present disclosure, an improved charging communication method and apparatus may be provided in which an electric vehicle finds a power supply device or electric vehicle supply equipment (EVSE), obtains location information and/or information for positioning using a communication technology specialized for short-range communication, and performs charging preparation and the charging process using a communication technology with various functions after the electric vehicle is positioned at a location where charging is possible.

In this process, in consideration of various types of electric vehicle charging door/ports, various types of electric vehicle supply equipment, and various charging methods when supplying electric power from the power supply device or electric vehicle supply equipment (EVSE) to the electric vehicle, message types and data formats may be proposed so that a procedure for positioning between the electric vehicle and a charging manipulator and for a preparatory phase for power supply may be performed.

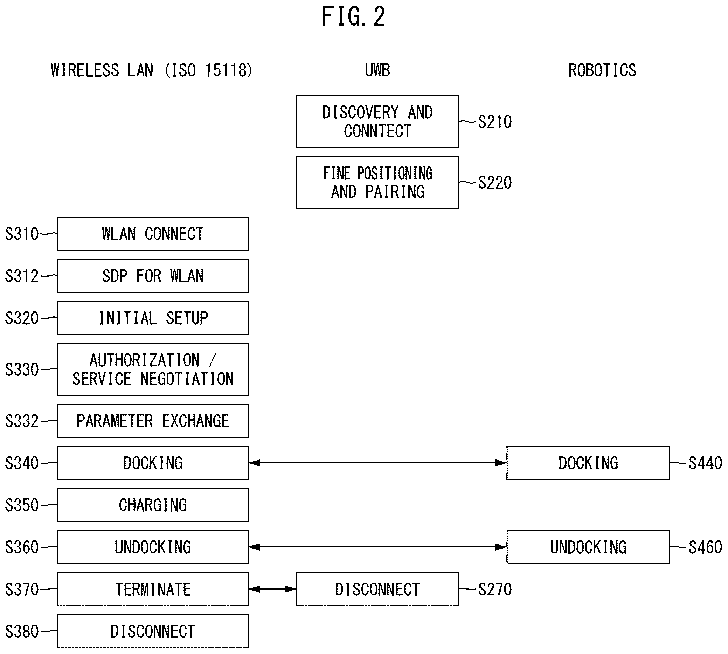

FIG. 2 is a conceptual diagram illustrating a protocol of a charging communication technology using wireless local area network (WLAN) and ultra-wide band (UWB) communication that may be employed in the architecture of FIG. 1 according to exemplary embodiments of the present disclosure.

In particular, the exemplary embodiment shown in FIG. 2 provides a charging communication method for an ACD using docking-undocking means with robotics, and discloses the process of the electric mobility entering the charging station to prepare for charging, initiating charging, and completing charging.

Pairing refers to a process in which communication connection is established between a user and a desired EVSE or ACD, and according to the exemplary embodiment of FIG. 2, pairing may be understood as a process of discovering an ACD UWB module closest to the mobility's UWB module and connecting/associating to the ACD UWB module.

Positioning may refer to a process of parking by moving to a sufficiently close location and/or position so that the manipulator of the ACD may access the inlet of the mobility. In this case, it may be required that the inlet position of the mobility is located within the mating space of the ACD.

In some cases, communication for charging electric mobility is performed using high-level communication such as WLAN, while a localization-specialized communication technology such as UWB is used to assist positioning and pairing. Localization-specialized communication technologies are more effective in positioning and pairing, and inefficiencies may arise when the entire communication session is managed by WLAN communication technology.

In the present disclosure, the advantages of localization-specialized communication technologies are maximized by performing positioning and pairing independently of WLAN, or prior to WLAN connection. The identification information of the electric mobility and the EVSE obtained during the positioning and pairing process may be utilized when establishing the WLAN connection, thereby improving the overall efficiency of the communication session.

The method proposed in the exemplary embodiments of the present disclosure may be referred to as a "pair-and-talk principle". However, such a designation does not limit the scope of the present disclosure.

In the exemplary embodiment of FIG. 2, UWB communication is used for convenience of explanation, but in other embodiments of the present disclosure, UWB may be replaced with or used in parallel with another first communication technology described later. The first communication technology may be a low-level communication technology and is required to be suitable for localization.

In the exemplary embodiment of FIG. 2, WLAN communication is used for convenience of explanation, but in other embodiments of the present disclosure, WLAN may be replaced with or used in parallel with another second communication technology described later. The second communication technology is required to be a high-level communication technology.

Exemplary embodiments of the present disclosure provide a charging communication method in which pairing is performed using a communication technology such as UWB (with a narrow range and favorable for location-specific communication), before performing main communication for electric mobility charging via a level-2 communication such as WLAN, positioning is performed before, after, or concurrently with the pairing (S220), and after pairing/positioning, WLAN communication for vehicle charging is performed (this communication is involved in the charging process before, during, and after charging, including processes such as SDP (S312), Setup (S320), authentication/authorization (S330), parameter exchange (S332), docking/charging/undocking (S340/S350/S360), and termination (S370)).

The first communication technology, such as UWB, may be used for pairing and mobility positioning, or for the preparation process thereof (S210, S220).

Pairing information collected by the first communication technology may be transferred to a layer for the second communication technology such as WLAN.

The first communication technology may refer to UWB, RFID, NFC, irDA, and the like. The first communication technology may, for example, be a low-level communication technology. The first communication technology may be a communication technology with low communication cost and implementable with simple hardware. The first communication technology may be a communication technology for performing a defined task in a defined environment. The defined task may include assistance for localization, pairing, and/or positioning included in the exemplary embodiment of the present disclosure.

The first communication technology may be a technology with a short communication range, which is suitable for identifying a counterpart and determining counterpart's position and/or distance.

In an alternative embodiment of the present disclosure, during the pairing and positioning process (S220) using the first communication technology, fine positioning may be assisted using visual information from a camera, CCTV, or other imaging means installed at the charging station. Additionally, visual information from imaging means held by the mobility or the user may be additionally used.

A WLAN client of an electric mobility may be connected to a correct WLAN server to ensure accurate pairing.

The remaining charging communication process after pairing may be performed using the second communication technology such as WLAN (S310, S312, S320, S330, S332, S340, S350, S360, S370, and S380).

The second communication technology may refer to, for example, a technology capable of level-2 communication, such as WLAN. The second communication technology may implement higher-level applications compared to the first communication technology and may provide various applications and functions.

That is, the second communication technology may refer to a technology that provides relatively rich information and functions through communication, offers excellent security performance for identification, authentication/authorization, control, billing, and has excellent communication performance in terms of capacity, speed, and the like.

In the ACD docking procedure (S440), a cable is connected, and then charging may be started (S350).

According to exemplary embodiments of the present disclosure, the charging process of an electric mobility may be performed through the following steps.

A mobility may be parked at the location of a charger, EVSE, or ACD.

In order that the mobility and the charger, EVSE, or ACD may identify a counterpart, a first communication technology such as UWB, RFID, NFC, or irDA may be used.

Identification information may be obtained during the pairing process (S220). The identification information may include the wireless module ID of the charger and the like. The identification information may be transmitted to the WLAN layer.

Wireless communication modules of a mobility and a charger, EVSE, or ACD may be connected with a counterpart by using the already shared identification information to be accurately associated without confusion. In this case, a WLAN-based pairing process may additionally be performed, but pairing process may be performed automatically and very easily based on the pre-shared identification information (pairing information).

Communication required for subsequent charging processes may be performed using WLAN. The high-bandwidth, reliable communication technology provided by WLAN may be applied to the charging communication process together with escalated security features.

The second communication technology such as WLAN may trigger other communication technologies. For example, communication technology with a robotics-based ACD may be triggered by the second communication technology (S440, S460). In addition, as the termination stage (S370) of the WLAN-based communication is performed, UWB-based communication may also be disconnected (S270).

Step S210 may begin when the mobility enters the charging spot.

In step S210, the mobility may provide the position coordinates of its inlet through a message.

Although an exemplary embodiment is shown in which the mobility first transmits a request message in step S210, in an alternative embodiment of the present disclosure, the EVSE/ACD/charger may periodically or non-periodically broadcast their mating space and/or localization parameters, and the mobility may receive and select one of them, thereby initiating step S210.

In step S220, localization and positioning may be performed together or sequentially in alternation. The mobility may continuously measure the mobility's own location and the relative distance to the ACD. As the mobility moves during the positioning, the mobility's location and relative distance may be updated. The mobility may move so that the mobility's inlet is positioned within the mating space.

Although FIG. 2 illustrates embodiments premised on ACD-based charging, alternative embodiments of the present disclosure may be applied to other use cases.

An alternative embodiment of the present disclosure may be applied to conductive charging (including AC and/or DC, etc.) using WLAN. Cases where the physical connection of the charging cable is performed without communication, for example, by a person may be considered.

Existing mechanisms such as CCS and CHAdeMO may use wired communication technologies embedded in charging cables. For example, PLC (Power Line Communication) may be used in CCS, and may or CANbus communication may be used in CHAdeMO.

In case that the pair-and-talk principle of the present disclosure is applied to a wired charging process, charging may be performed as follows.

A user may park a mobility in front of a charger by personal choice and plug a charging cable into the mobility.

In this case, pairing may be performed using at least one of an irDA signal embedded in the coupler, an RFID tag prepared by the charger and tagged to the inlet of the mobility, a UWB communication technology capable of distance measurement as in ACD, NFC communication between the charger's connector and the mobility's inlet, a control pilot signal of the CCS connector, a CAN signal of the CHAdeMO connector, a QR/QCR code attached to the inlet (which may be read by a camera attached to the connector), etc.

Even in this case, the identification information may be transferred to the layer of the second communication technology such as WLAN. Since the mobility is already paired, the mobility may be accurately associated with the wireless module of the corresponding charger.

In another alternative embodiment of the present disclosure, the pair-and-talk principle may be applied to WLAN-based wireless power transfer (WPT).

The mobility may approach a charger selected by the user and enter the charging spot in front of the charger.

The mobility may start discovery and distance measurement using a first communication technology such as UWB and be connected to the nearest/closest charger.

Optionally, the mobility may perform fine positioning using a UWB-based localization method. In this case, the mobility may be positioned at a primary core for optimal charging performance through fine positioning.

The mobility may exchange identification information with the charger using a first communication technology such as UWB.

The mobility may be connected to the correct WLAN AP using the pairing information. Charging communication may be initiated using a second communication technology such as WLAN. Subsequent operations may comply with the specifications defined in ISO 15118-20.

In case that fine positioning by a first communication technology such as UWB is not performed before the WLAN connection, the mobility and the charger may optionally perform fine positioning using a first communication technology such as UWB after the WLAN connection.

In another alternative embodiment of the present disclosure, the pair-and-talk principle may be applied to WLAN-based wireless power transfer (WPT) using a first communication technology such as NFC or RFID.

A simple device based on a technology such as NFC or RFID may be provided for pairing.

The mobility may approach a charger selected by the user and enter the charging spot in front of the charger.

Within the range of the first communication technology, a pairing device may perform pairing. The pairing device may be placed on either the mobility or the EVSE.

In the case of NFC, the mobility may transmit identification information to the charger.

According to exemplary embodiments of the present disclosure, in order for a charger to obtain the identification information of the mobility in the case of RFID, the charger may read the RFID of the mobility.

The mobility may be connected to the correct WLAN AP using the pairing information.

In the case of NFC, the mobility may be connected to the AP using the same identification information obtained via NFC.

In the case of RFID, the AP may embed the identification information of the mobility in its own WLAN management frame to be transmitted so that the mobility is connected to the paired charger's AP.

Charging communication may be initiated using a second communication technology such as WLAN. The subsequent operations may follow the specifications defined in ISO 15118-20.

In case that fine positioning via a first communication technology such as UWB has not been performed in advance of the WLAN connection, the mobility and the charger may optionally perform fine positioning using a first communication technology such as UWB during the WLAN communication as defined in ISO 15118-20.

To apply the pair-and-talk principle proposed in the present disclosure to the ISO 15118-8 standard, the following elements may be modified.

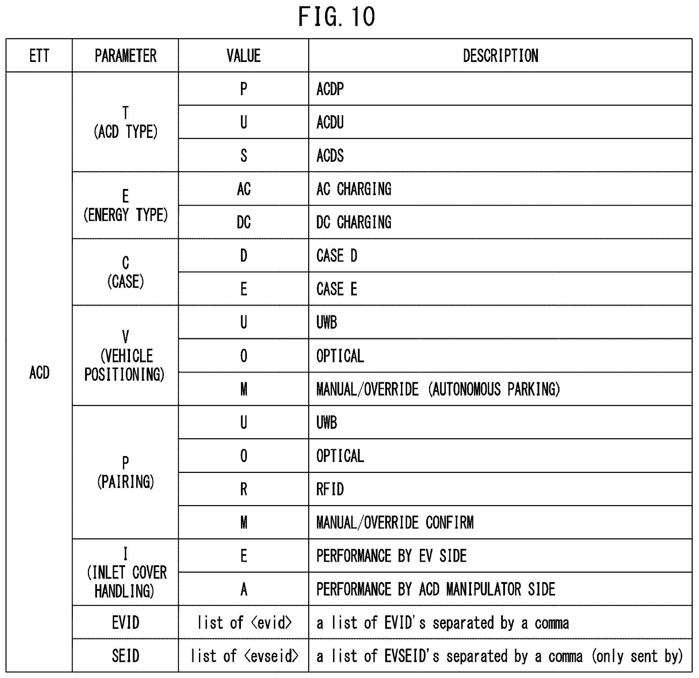

As illustrated in FIG. 10 described below, EVSEID and EVID may be added as parameters through additional information definitions for AC, DC, WPT, and ACD charging.

EVID may be provided as a list of EVIDs of mobility units paired with the charger associated with the AP.

For example, multiple EVIDs may be separated by commas, such as EVID=12a,5XY,z2L.

EVSEID is a list of EVSEs associated with an AP, and may be separated by commas.

For example, multiple EVSEIDs may be included in the list, such as EVSEID=2T3,53,709.

On the EVSE side, since one AP may manage multiple chargers or EVSEs, a list of multiple EVSEIDs may be provided, whereas on the mobility side, only one EVID may be transmitted because a single EVSE has already been selected.

Meanwhile, since one AP may manage multiple chargers or EVSEs, a single AP may be associated with and/or paired with multiple mobility units.

In another alternative embodiment of the present disclosure, various pairing methods may be proposed depending on whether a pairing device is used.

When both the mobility and the charger exchange identifiers with each other (e.g., UWB, CAN, irDA), two-way pairing may be performed.

The AP may provide a SEID, and the mobility may provide an EVID.

The mobility may select one AP with a SEID obtained through pairing, and the AP may accept pairing with the mobility that has an EVID matching one obtained via pairing.

In an alternative embodiment, one-way pairing on EV may be performed in which a mobility transmits its identifier to a charger (e.g., RFID, NFC).

The AP may provide both EVID and SEID

The mobility may provide only EVID.

The mobility may select an AP that has the same EVID transmitted during pairing.

In another alternative embodiment, one-way pairing on charger may be performed in which the charger transmits its identifier to the mobility (e.g., the control pilot signal in IEC 61851-1).

The AP may provide SEID.

The mobility may provide both EVID and SEID

The mobility may select an AP that has the SEID obtained during pairing.

Once the pairing is completed and wireless connection is correctly established, the pairing identifiers including EVID and SEID may be used in SDP request and response messages.

The EVID information may be used by a SDP server so that the mobility may accurately identify the SECC responsible for the EVSE already paired with the mobility.

The EVSEID information may be used so that the mobility may confirm the SECC indicated by the SDP server in charge of the already paired EVSE.

As a localization-specialized communication technology, the first communication technology such as UWB may perform vehicle positioning and pairing, and the pairing or positioning may be performed together with auxiliary means such as RFID and cameras. This process may be supported by using vision information obtained from short-range communication networks such as RFID, BLE, irDA, or optical means and imaging devices.

In an alternative embodiment of the present disclosure, a first communication technology such as UWB may be used to perform positioning and pairing simultaneously. During the pairing and positioning processes, coordinate information of ACD_EV and ACD_SE may be added to messages exchanged between entities.

Examples of such key messages may include ACDInitialSetup, ACDPositioning, ACDPairing, ACDDocking, and ACDUndocking.

Docking/undocking may primarily be handled using robotics (manipulators and/or robot arms). In an alternative embodiment of the present disclosure, the ACD system may use proprietary communication such as BLE or UWB for docking/undocking as an auxiliary.

As shown in FIG. 2, a session including a modified embodiment based on ISO 15118-20 using UWB and WLAN is illustrated overall. That is, the embodiment of FIG. 2 may include UWB-based discovery and connection (S210) and UWB-based fine positioning and pairing (S220).

In the step S210, the electric mobility and the EVSE (ACD) discover the nearest/closest UWB and establish communication. In this step, a first communication technology such as UWB, which has a short range and is optimized for roles such as localization, allows the electric mobility to discover the nearest/closest EVSE (ACD) at low cost.

In the positioning of step S220, the electric mobility may be controlled or guided or necessary information may be provided to a driver so that the electric mobility moves to a dockable location or mateable position and adjusts the electric mobility's position.

In the pairing of step S220, the electric mobility may obtain a WLAN network ID that may be connected via WLAN using UWB. The EVSE may obtain the EVID of the electric mobility through UWB.

Subsequently, sessions of WLAN connection (S310), SDP (SECC Discovery Protocol) for WLAN (S312), initial setup (S320), authorization/service negotiation (S330), exchange of parameters (ExchangeParams: S332), docking (S340), charging (S350), undocking (S360), etc. may be included.

The WLAN connection session (S310) may include L2 setup and compatibility checks using ISO 15118-8. The WLAN SDP session (S312) may include SECC discovery and compatibility filtering. The initial setup session (S320) may include parameter negotiation. While the initial setup session (S320), WLAN is mainly used, but UWB may be used secondarily for compatibility checks and parameter exchange (S332), etc.

The positioning session (S220) may use UWB to position the vehicle within the docking area, and the ACD may record the results. The pairing session (S220) may use UWB to ensure proper pairing between the electric vehicle and the SECC and/or the ACD.

The docking session (S340) performs docking by the ACD using WLAN (S440), and the ACD may record the result (S440). The undocking session (S360) may perform undocking by the ACD (S460), and the ACD may record the result (S460). When the ISO 15118-based ACD charging communication terminates (S370), the wireless LAN connection such as UWB may be disconnected (S270) prior to or together with the disconnection (S380) of the corresponding communication.

The WLAN connection session (S310) may use the discovery and connection session of ISO 15118-8 L2. For example, the SECC may broadcast a beacon (VSE={ETT:0x08, AI: ACD:T=S:C=D:V=U:P=U:I=E}) to EVCC.

The EVCC may send a Probe Request (VSE={ETT:0x08, AI: ACD:T=S:C=D:V=U:P=U:I=E:ID=ABCD123}) to the SECC.

The SECC may provide a Probe Response (VSE={ETT:0x08, AI: ACD:T=S:C=D:V=U:P=U:I=E}) to the EVCC. This process may be part of active scanning.

An Association Request (VSE={ETT:0x08, AI: ACD:T=S:C=D:V=U:P=U:I=E:ID=ABCD123}) and an Association Response (Result = Success) may be additionally transmitted and received between the EVCC and the SECC.

In this case, Edition 3 (ed 3) of ISO 15118-8 may be used. The EVCC and SECC may verify compatibility and be associate with each other using the VSE (Vendor Specific Element). The VSE field may refer to IEEE 802.11 management frames.

ETT of the message shared between the EVCC and the SECC means Energy Transfer Type, and AI, which is an abbreviation for Additional Information, may describe detailed optional parameters.

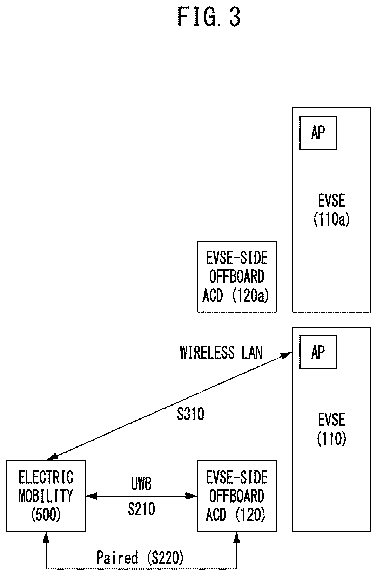

FIG. 3 is a conceptual diagram illustrating entities participating in charging communication according to exemplary embodiments of the present disclosure.

As shown in FIG. 3, an electric vehicle/mobility 500 may be paired with a first EVSE 110 and a first ACD 120 among a plurality of EVSEs 110a and 110 and their corresponding ACDs 120a and 120.

At this time, discovery and connection (S210) between the electric vehicle 500 and the first ACD 120 may be performed using UWB, and pairing (S220) between the electric vehicle 500 and the first ACD 120 may be performed.

Then, a WLAN connection (S310) may be established based on WLAN and the first AP of the first EVSE 110.

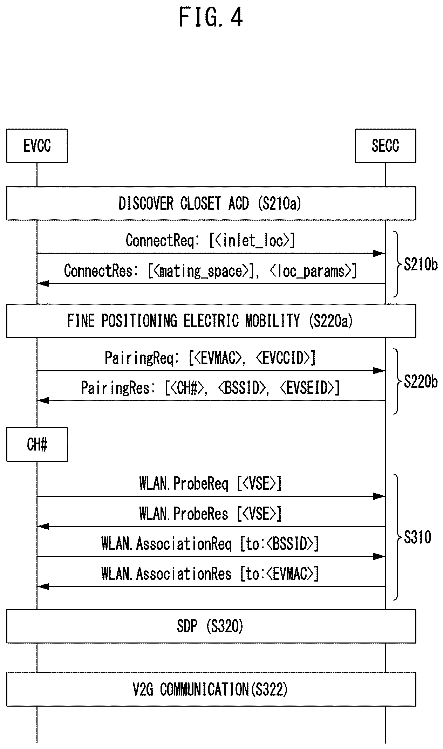

FIG. 4 is a conceptual diagram illustrating detailed protocols of the charging communication technology according to exemplary embodiments of the present disclosure.

As shown in FIG. 4, a charging communication method for electric mobility charging according to exemplary embodiments of the present disclosure is a communication method performed by an electric vehicle communication controller (EVCC) of the electric mobility, and may include: discovering a first electric vehicle supply equipment (EVSE) or its associated ACD within a predetermined range using the first communication technology (S210a); obtaining information for positioning the electric mobility to a charging location for being supplied with power from the first EVSE using the first communication technology (S220a); and performing communication connection with a supply equipment communication controller (SECC) of the first EVSE using a second communication technology (S310).

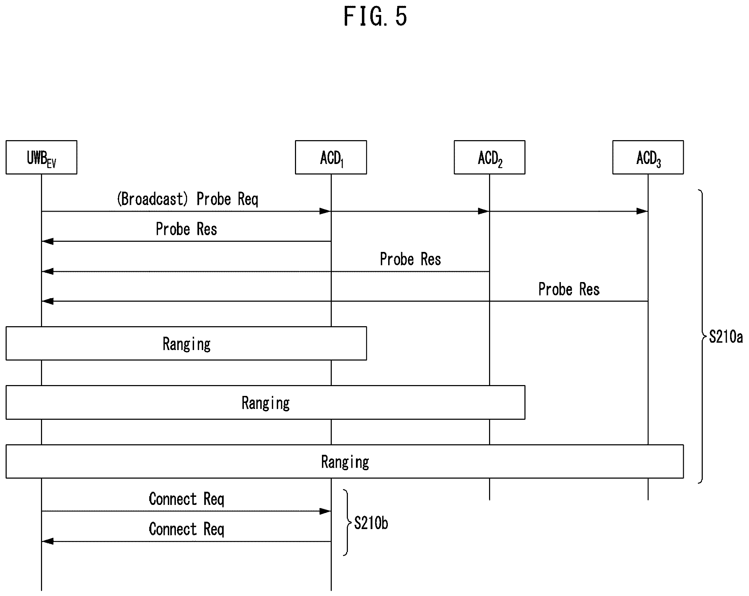

FIG. 5 is a conceptual diagram illustrating protocols of a discovery and connection process of the charging communication technology according to exemplary embodiments of the present disclosure.

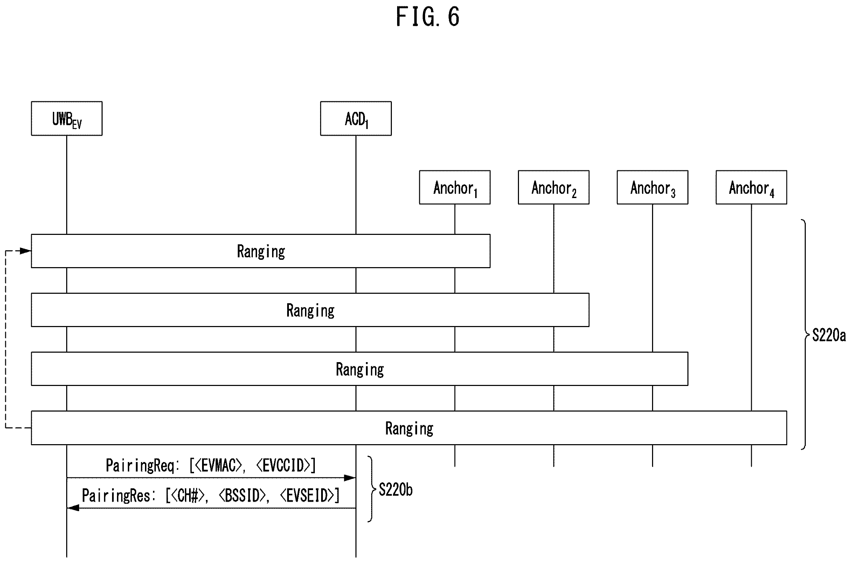

FIG. 6 is a conceptual diagram illustrating protocols of a fine positioning and pairing process of the charging communication technology according to exemplary embodiments of the present disclosure.

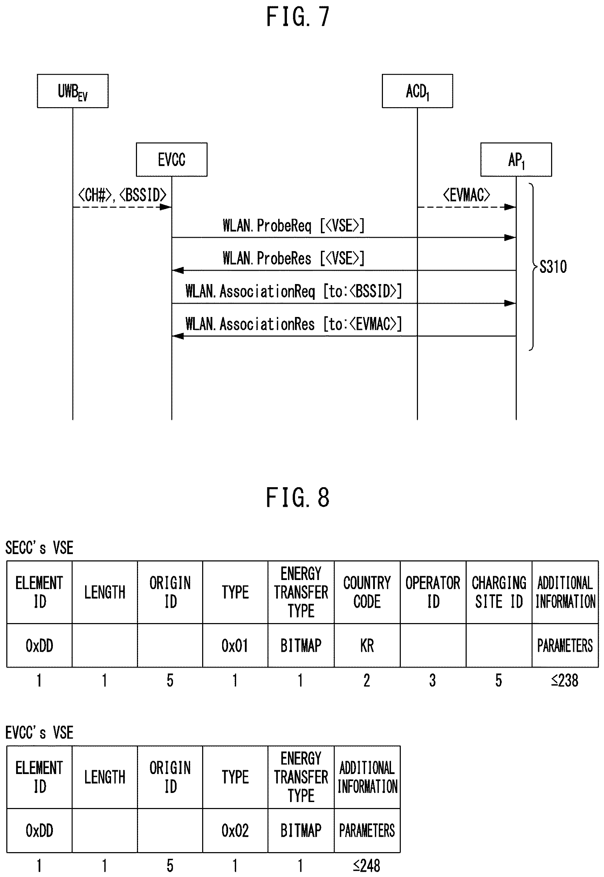

FIG. 7 is a conceptual diagram illustrating protocols of a wireless LAN connection process of the charging communication technology according to exemplary embodiments of the present disclosure.

As shown in FIGS. 4 through 7, the discovering the first EVSE using the first communication technology, which is performed by the EVCC (S210a), may include: broadcasting, by the EVCC, a probe request message (e.g., Probe Req) using the first communication technology; and receiving, by the EVCC, a probe response message (e.g., Probe Res) transmitted from at least one EVSE within range using the first communication technology.

The discovering of the first EVSE using the first communication technology by the EVCC (S210a) may further include: measuring a distance to each of at least one EVSE within range, based on the probe response message; and selecting a first EVSE closest to the electric mobility from among the EVSEs within range, based on the measured distance.

The charging communication method according to exemplary embodiments of the present disclosure may further include: transmitting, to the discovered first EVSE, a connection request message (ConnectReq) using the first communication technology; and receiving, from the first EVSE, a connection response message (ConnectRes) corresponding to the connection request message using the first communication technology (S210b).

The connection request message may include inlet location/position information <inlet_loc> of the electric mobility, and the connection response message may include mating space information <mating_space> of the first EVSE or location estimation parameters (localization parameters) <loc_params> of the first EVSE.

The charging communication method may further include fine positioning the electric mobility to a charging location mateable with the first EVSE (S220, S220a).

Obtaining(acquiring or receiving) information for positioning the electric mobility (S220a) may include: measuring distances to each of a plurality of location estimation anchors (localization anchors) associated with the first EVSE; and precisely measuring the distance and direction between the charging port of the first EVSE and the charging inlet of the electric mobility based on the distances to each of the localization anchors.

The method may further include: transmitting, by the EVCC, a pairing request message (PairingReq) to the first EVSE, after obtaining the information for positioning the electric mobility; and receiving, from the first EVSE, a pairing response message (PairingRes) (S220b).

The pairing request message may include EVMAC (Electric Vehicle Medium Access Layer) information of the electric mobility or identification information of the EVCC, and the pairing response message may include the AP's channel number <CH#>, basic service set identifier <BSSID>, or EVSE identification <EVSEID>. The channel number <CH#> may be used for scanning the AP channel.

The first communication technology may be one of UWB, RFID, NFC, or IrDA.

Identification information obtained through the pairing process with the discovered first EVSE using the first communication technology may be transferred to the wireless communication layer that uses the second communication technology.

After the WLAN communication connection is performed (S310), the SDP for WLAN may be performed (S312).

Then, vehicle-to-grid (V2G) communication (S322) may be performed following initial setup (S320). The V2G communication (S322) may be performed after the initial setup (S320), or the V2G communication (S322) may be executed as an independent process from steps following the initial setup.

The charging communication method for electric mobility according to embodiments of the present disclosure is a communication method performed by a Supply Equipment Communication Controller (SECC) associated with a primary assembly that transmits power to the electric mobility, and the charging communication method may include: receiving a probe request message broadcasted from the electric mobility using the first communication technology (S210a); transmitting a probe response message in response to the probe request message using the first communication technology (S210a); providing, to the electric mobility via the first communication technology, information for positioning the electric mobility to a charging location for being supplied with power from the primary assembly (S220a); and performing communication connection for charging with the electric mobility using the second communication technology (S310).

The charging communication method for electric mobility may further include: receiving a connection request message including inlet location/position information of the electric mobility from the electric mobility using the first communication technology; and transmitting a connection response message including mating space information of the primary assembly or localization parameters associated with the primary assembly to the electric mobility using the first communication technology.

In providing information for positioning electric mobility to a charging position/location (S220a), it is possible to support the acquisition of fine positioning information required for electric mobility to reach a chargeable mating position by providing, to the electric mobility, location/position information of each localization anchor associated with the primary assembly.

According to exemplary embodiments of the present disclosure, the charging communication method for charging electric mobility may further include performing a pairing process between the electric mobility and the primary assembly using a first communication technology, based on identification information of the electric mobility, service identification information associated with the primary assembly, or communication service identification information using a second communication technology of the primary assembly (S220b), after the electric mobility has been positioned to the charging position/location (S220, S220a).

The first communication technology may be any one of UWB, RFID, NFC, or IrDA technologies.

The performing of the communication connection for participating in the charging process between the electric mobility and the charging system using the second communication technology (S310) may be performed based on the identification information obtained through the pairing process using the first communication technology.

FIG. 8 is a conceptual diagram illustrating VSEs of the SECC and EVCC that may be employed in a discovery and connection session according to exemplary embodiments of the present disclosure.

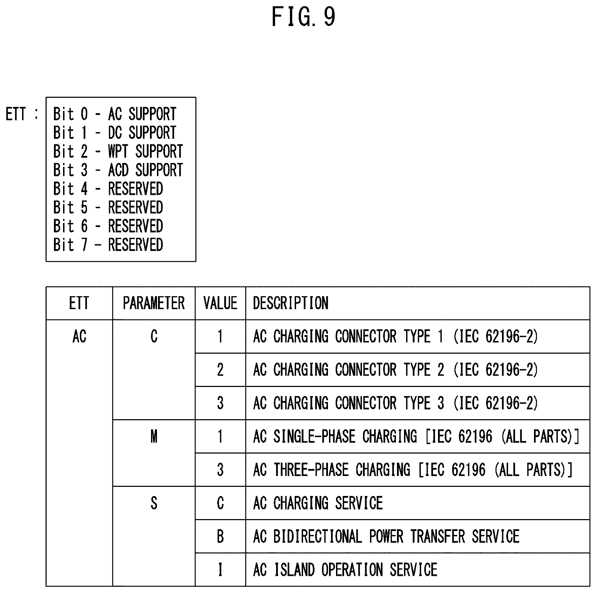

FIG. 9 is a conceptual diagram illustrating energy transfer type (ETT) settings that may be employed in a discovery and connection session according to exemplary embodiments of the present disclosure.

As shown in FIGS. 8 and 9, the EVCC and the SECC may check compatibility and be connected to each other according to communication protocols such as ISO 15118-8. For the connection, a VSE (Vendor Specific Element) of IEEE 802.11 management frames, an ETT (Energy Transfer Type), or additional information (AI: Additional Information), which is a detailed optional parameter, may be used.

FIG. 10 is a conceptual diagram illustrating proposed changes of ACD ETT based on ISO 15118-8, which is applicable to an ACD charging communication method according to exemplary embodiments of the present disclosure.

As shown in FIGS. 8 to 10, in case that the ACD includes all ACD types, such as ACDP, ACDU, and ACDS, the ETT does not need to be changed.

The additional information (AI) may be expressed as a variable-length UTF-8 string. For example, additional information (AI) may be expressed as follows.

<ETT>:<param>=<val>:***:<param>=<val>:<ETT>:<param>=<val>:***

For example, ETT=0x01 indicates AC-only, and it may be expressed that AI ="AC:C=1:M=1:S=B". An example of the AI expression in the case of such an ETT (AC-only) may be illustrated as in FIG. 7.

The ACD parameters may be defined only with the EVID. This case may be helpful for quick and accurate pairing. Depending on the ACD type, definitions of additional parameters are required, which will be described in detail below.

As shown in FIG. 10, exemplary changes to ISO 15118-8 for ACD may be identified. In this case, the ACD ETT may be extended together with the additional information. Also, EVID and SEID parameters may be added.

For example, the following expression may be possible:
"ACD:T=S:E=DC:C=D:V=U:P=U:I=E: EVID=ABC,123:SEID=23T,23,XYZ"

Referring again to FIG. 2, in the cooperation process of the WLAN connection session (S310), the EVCC and the SECC may perform the WLAN connection session (S310) by using the VSE of the SECC in beacon and probe response, and by using the VSE of the EVCC in the probe request message and the negotiation/renegotiation request message.

For example, in the VSE of the SECC, the ETT and the AI may be expressed as follows:
ETT=0x08: ACD supporting only charging

AI="ACD:T=S:E=DC:C=D:V=U:P=U:I=E:ID=HMC-1234"

That is, the AI delivered from the SECC to the EVCC identified as HMC-1234 may indicate information regarding an ACDS type, DC charging, Case D, positioning by UWB, pairing by UWB, and an inlet operated by the EV.

In addition, in the VSE of the EVCC, the ETT and the AI may be expressed as follows:
ETT=0x08: ACD supporting only charging

AI="ACD:T=S:E=DC:C=D:V=U:P=U:I=E:ID=KRKEP-1234"

That is, the AI delivered from the EVCC to the SECC identified as KRKEP-1234 may indicate information regarding ACDS type, DC charging, Case D, positioning by UWB, pairing by UWB, and an inlet operated by the EV.

Although not shown in FIGS. 2 to 7, a WPA2/WPA3 Layer 2 Security session may optionally be performed between the EVCC and the SECC prior to performing the SDP session (S312) after the WLAN connection session (S310), in order to enhance security.

Referring again to FIG. 2, as an exemplary embodiment of the SDP session (S312) after the WLAN connection session (S310), the EVCC and the SECC may perform an ISO 15118-20-based L3 discovery and connection procedure.

At this time, the EVCC may broadcast an SDP (SECC Discovery Protocol) Request (PPD=UWB, Coupler=ACD-S, and EVID=" 1234") to SDP.

The SDP may respond to the EVCC with an SDP Response (Coupler=ACD-S, EVSEID="ABCD", and DiagStatus=FinishedwithEVSEID).

The SDP may provide the SECC's connection information (IP number / port number) to the EVCC and the SECC. The SDP may exchange compatibility information (e.g., coupler type, charging type, etc.) with the EVCC and the SECC. The SDP may exchange pairing ID (EVID, EVSEID) with the EVCC and the SECC.

Although not shown in FIG. 2, a TCP & TLS Connection Establishment session may be performed between the EVCC and the SECC after the SDP session (S312).

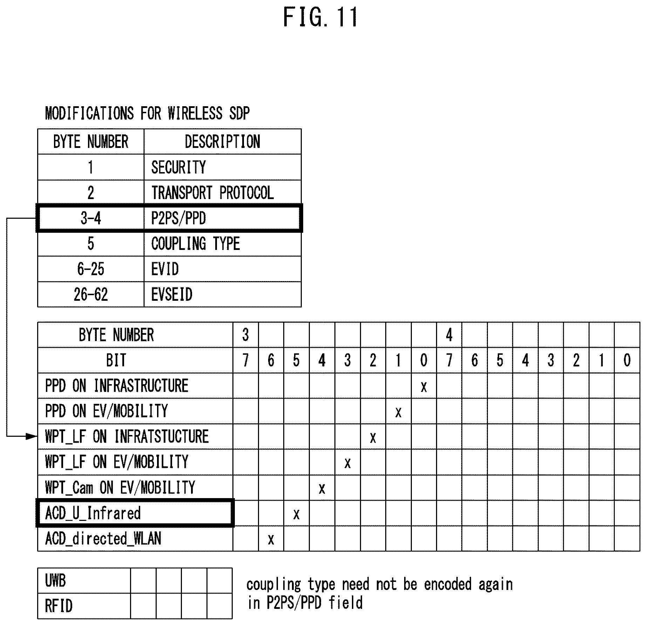

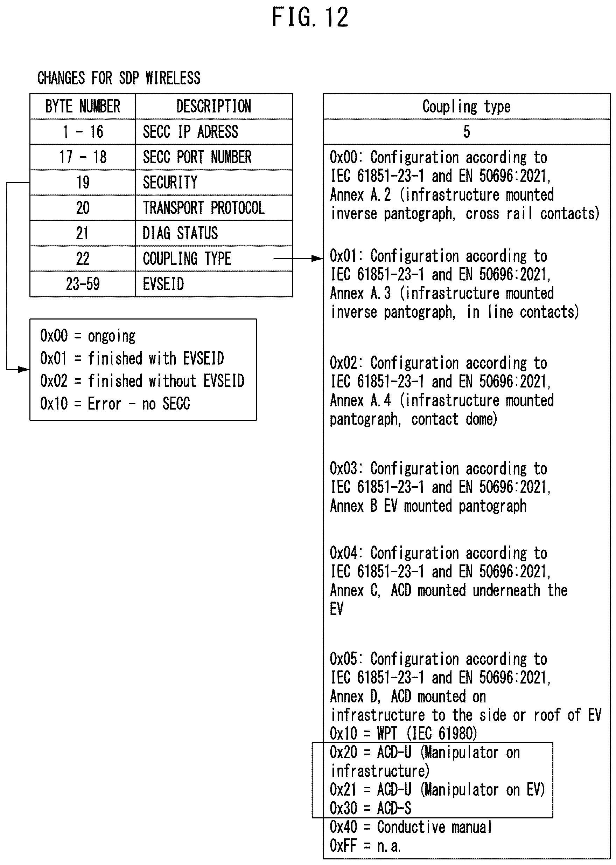

FIG. 11 and FIG. 12 are conceptual diagrams illustrating proposed changes of a service discovery protocol (SDP) applicable to an ACD charging communication method according to exemplary embodiments of the present disclosure.

Here, in the SDP, the EVCC and the SECC may operate to provide the SECC's connection information such as IP number and/or port number, to exchange compatibility information such as coupler type and charging type, and to exchange pairing identifiers such as EVID and EVSEID.

The above-described SDP parameter set may change SDP wireless environment. When UWB or RFID is used, the coupling type between the EVCC and the SECC does not need to be re-encoded in the P2PS and/or PPD fields.

Referring again to FIG. 2, as part of the initial setup session (S320), a protocol negotiation procedure may be performed. That is, in the supported application protocol phase, the EVCC and the SECC may negotiate the protocol to be used. Currently, four namespaces are selectable in ISD 15118-20. The four different namespaces are as follows:
urn:iso:std:iso:15118:-20:AC
urn:iso:std:iso:15118:-20:DC
urn:iso:std:iso:15118:-20:WPT
urn:iso:std:iso:15118:-20:ACDP

In the present exemplary embodiment, in addition to the above four namespaces, another four namespaces are added. The additional four namespaces are as follows:
urn:iso:std:iso:15118:-20:ACDS-AC
urn:iso:std:iso:15118:-20:ACDS-DC
urn:iso:std:iso:15118:-20:ACDU-AC
urn:iso:std:iso:15118:-20:ACDU-DC

Even when the above-described eight namespaces are used, changes in the subsequent session setup may not be required.

When using the ISO 15118-20 Protocol Negotiation session, the EVCC may transmit a SupportedAppProtocolReq (namespace="iso:15118:-20:ACDS-DC", SchemaID=1) to the SDP, and the SDP may provide feedback to the EVCC with a SupportedAppProtocolRes (SchemaID=1, OK).

Meanwhile, the EVCC may provide the EVCCID, and the SECC may provide the EVSEID and the session ID. The session ID may be provided via the header of the message. In this case, the session ID may be set to match the "ID" in the VSE of the WLAN frame.

For example, in the ISO 15118-20 SessionSetup, the EVCC may transmit a SessionSetupReq (EVCCID="HKM1234") to the SDP, and the SDP may provide feedback to the EVCC with a SessionSetupRes (EVSEID="KEPCO1234").

Meanwhile, for preparation of pairing and positioning, the EVCC and the SECC may each trigger a wake-up command to the ACD device during initialization of the WLAN device. The EVCC may trigger a wake-up command to the secondary assembly (ACD_EV), and the SECC may trigger a wake-up command to the primary assembly (ACD_SE). In case that the startup of the ACD device is not completed, the EVCC and the SECC may obtain configuration information from the ACD device. The configuration information may include a MAC address of the ACD device. The acquisition of such configuration information may be optionally performed.

The wireless power transfer (WPT) sequence that may be employed in the ACD charging communication method according to exemplary embodiments of the present disclosure may sequentially perform a WPT_FinePositioningSetup, WPT_FinePositioning, WPT_Pairing, and AuthorizationSetup session after performing the SessionSetup.

In addition, a wireless power transfer (WPT) sequence according to exemplary embodiments of the present disclosure may sequentially perform a WPT_ChargeParameterDiscovery session, a ScheduleExchange session, a WPT_AlignmentCheck session, and a PowerDelivery session after the ServiceSelection session is performed and after the vehicle pauses. The PowerDelivery session may be performed in parallel with a WPT_ChargeLoop session and may cross-reference the results of each session. After the PowerDelivery session is completed, a SessionStop session may be performed and the sequence may be terminated.

An ACD Pentagraph (ACDP) sequence that may be applied to an ACD charging communication method according to exemplary embodiments of the present disclosure may sequentially perform a VehiclePositioning process and an AuthorizationSetup process after performing a SessionSetup. In addition, the ACDP sequence according to exemplary embodiments of the present disclosure may sequentially perform a DC_ChargeParameterDiscovery, a ScheduleExchange, an ACDP_Connect, a DC_CableCheck, a DC_Precharge, and an ACDP_Disconnect after the ServiceSelection session is performed. After the DC_Precharge session is performed, the PowerDelivery session may be performed, and the PowerDelivery session may be performed in parallel with a DC_ChargeLoop session and may cross-reference the results of each session. The ACDP_Disconnect may be performed by referencing the results of the ACDP_Connect, DC_CableCheck, DC_Precharge, PowerDelivery, and DC_ChargeLoop sessions.

An ACD underbody (ACDU) AC sequence that may be applied to an ACD charging communication method according to exemplary embodiments of the present disclosure may sequentially perform an ACDU_Setup, an ACDU_EVPositioning, an ACDU_Pairing, and an AuthorizationSetup session after performing a SessionSetup.

In addition, the ACDU AC sequence according to exemplary embodiments of the present disclosure may sequentially perform an AC_ChargeParameterDiscovery, a ScheduleExchange, an ACDU_Docking, a PowerDelivery, and an ACDU_Undocking session after the ServiceSelection session is performed and after the electric vehicle pauses. In case that docking fails after the ACDU_Docking session, the sequence may return to the ACDU_Setup session. The PowerDelivery session may be performed together with the ACDU_AC_ChargeLoop session and may be implemented to be performed while the charging loop is formed and maintained. When the PowerDelivery session is completed and the ACDU_Undocking session is performed, the ACDU AC sequence may be terminated by the SessionStop session. In case that the Authorization/Service done state is reached after the ACDU_Pairing session, intermediate sessions may be omitted and the ACDU_Docking session may be performed.

An ACD Sidearm (ACDS) DC sequence that may be applied to an ACD charging communication method according to exemplary embodiments of the present disclosure may sequentially perform an ACDS_Setup, an ACDS_EVPositioning, an ACDS_Pairing, and an AuthorizationSetup session after performing a SessionSetup.

In addition, the ACDS DC sequence according to exemplary embodiments of the present disclosure may sequentially perform an ACDS_ChargeParameterDiscovery, a ScheduleExchange, an ACDS_Docking, a DC_CableCheck, a DC_PreCharge, a PowerDelivery, and an ACDS_Undocking session after the ServiceSelection session is performed and after the electric vehicle pauses. In case that docking fails after the ACDS_Docking session, the sequence may return to the ACDS_Setup session. The PowerDelivery session may be performed together with the ACDS_ChargeLoop session and may be implemented to be performed while the charging loop is formed and maintained. When the PowerDelivery session is completed and the ACDS_Undocking session is performed, the ACDS DC sequence may be terminated by the SessionStop session. In case that the Authorization/Service done state is reached after the ACDS_Pairing session, intermediate sessions may be omitted and the ACDS_Docking session may be performed.

Referring again to FIG. 2, an ACD setup session (S320) of the ACD charging communication method according to exemplary embodiments of the present disclosure may include negotiation methods for positioning, pairing, docking, and inlet handling in a setup request message and a setup response message of ACDS or ACDU, and add other parameters required for the supported methods may be added. Here, the EV may provide a list of supported methods or types, and the EVSE may select one of them.

Negotiation parameters may include positioning methods, pairing methods, docking types, inlet handling types, mating space, operating space, and all additional parameters related to a supporting methods. The additional parameters may include UWB addresses, UWB configuration and ranging parameters in the case of UWB, and RFID tag identifiers in the case of RFID.

For example, the EVCC may transmit a message of ACDS_SetupReq (Positioning=UWBIOptical, Pairing=UWB|RFID, Docking=D, Inlet=EVISE, MatingSpace=XYZ , [UWBEV =< UWBEV Addr>]) to the SECC. The SECC may provide feedback to the EVCC with ACDS_SetupRes (Positioning=UWB, Pairing=RFID, Docking=D, Inlet=EV, OperatingSpace=XYZ, [UWBSE =<UWBSE Addr>, <UWB-Conf>, <Ranging-Conf>]).

In another exemplary embodiment of the present disclosure, in the case of UWB connection for ranging and pairing, information on a new UWB connection and ranging setup between the EV and the ACD under a given configuration may be included as negotiation parameters. This UWB connection for ranging and pairing may be optionally performed.

For example, the EVCC may transmit a " Configure (<UWB-Conf>, <Ranging-Conf>, <UWBSE Addr>)" message to the ACD_EV to support parameter setup of the secondary assembly, and the SECC may transmit a " Configure (<UWB-Conf>, <UWBEV Addr>)" message to the ACD_SE to support parameter setup of the primary assembly.

Meanwhile, in an ACD positioning session (S220a) that may be applied to the ACD charging communication method according to exemplary embodiments of the present disclosure, the EV positioning request message and the EV positioning response message of the ACDS may be repeatedly exchanged between the EVCC and the SECC until positioning is completed. Actual positioning may be performed through UWB. In this case, actual execution of positioning may occur outside the V2G communication range, and as a potential positioning method, parameters for use when necessary may be added.

The vehicle positioning process using the UWB network may be performed by referring to IEC 61851-27 Annex D.

For example, the EVCC may transmit an "ACDS_EVPositioningReq (EVProcessing=Ongoing, EVResult=Unknown)" message to the SECC, and the SECC may provide feedback to the EVCC with an "ACDS_EVPositioningRes (EVSEProgressing=Ongoing, EVSEResult=Unknown)" message.

The EVCC may transmit a "Positioning-Start( )" message to the ACD_EV, and the SECC may transmit a "Positioning-Start( )" message to the ACD_SE, respectively. The ACD_EV may provide feedback to the EVCC with messages such as "Positioning-Status(Ongoing)" and "Positioning-Status(Finished)", and the ACD_SE may provide feedback to the SECC with messages such as "Positioning-Status(Ongoing)" and "Positioning-Status(Finished)".

The EVCC may transmit an "ACDS_EVPositioningReq (EVProcessing=Finished, EVResult=Success)" message to the SECC, and the SECC may provide feedback to the EVCC with an "ACDS_EVPositioningRes (EVSEProgressing=Finished, EVSEResult=Success)" message.

In an ACD pairing session (S220b) that may be applied to the ACD charging communication method according to another exemplary embodiment of the present disclosure, pairing may be optionally performed using a PPD (Pairing-Positioning Device), such as RFID or UWB in the pairing request and pairing response of the ACDS. In case that positioning via UWB or the like provides reliability for pairing, pairing may be omitted.

The PPD may provide an ObservedID of the counterpart. That is, the PPD of the EV may operate such that the EV sends the ObservedID of the counterpart, and the PPD of the EVSE may operate such that the EVSE sends the ObservedID of the counterpart.

For example, the EVCC may transmit an "ACDS_PairingReq (EVProcessing=Ongoing, EVResult=Unknown)" message to the SECC, and the SECC may provide feedback to the EVCC with an "ACDS_PairingRes (ObservedID='ev_rfid', EVSEProcessing=Ongoing, EVSEResult=Unknown)" message.

The EVCC may transmit an "ACDS_PairingReq (EVProcessing=Finished, EVResult=Success)" message to the SECC, and the SECC may provide feedback to the EVCC with an "ACDS_PairingRes (EVSEProcessing=Finished, EVSEResult=Success)" message.

Referring again to FIG. 2, in an exemplary embodiment of the present disclosure regarding the Authorization / Service Negotiation (S330) and Parameter Exchange (S332) sessions, after the WLAN connection (S310), AuthorizationSetup, Authorization, Service Discovery, ServiceDetail, Service Selection, ChargeParameterDiscovery, and ScheduleExchange may be sequentially performed in the stated order.

In the ServiceDiscovery procedure of the ACD charging communication method according to exemplary embodiments of the present disclosure, new ServiceID definitions may be added.

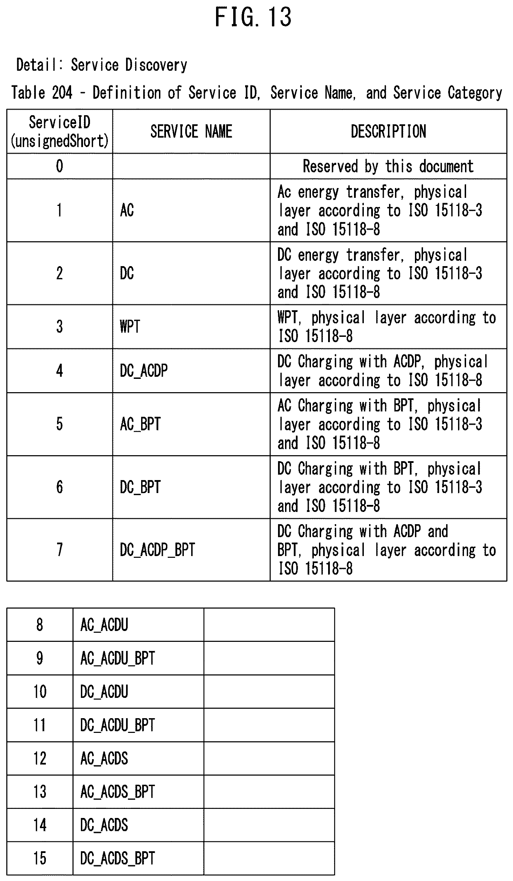

FIG. 13 is a conceptual diagram illustrating a proposed new service ID applicable to a service discovery session according to exemplary embodiments of the present disclosure.

As illustrated in FIG. 13, the new ServiceID definitions may add ServiceIDs 8 through 15 and their definitions to the existing eight ServiceIDs 0 through 7.

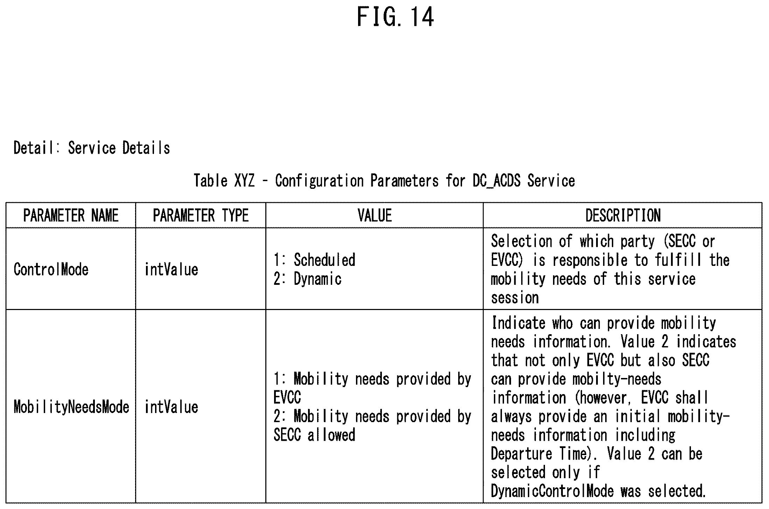

FIG. 14 is a conceptual diagram illustrating proposed configuration parameters of a DC-ACDS service applicable to a service detail format according to exemplary embodiments of the present disclosure.

Referring again to FIG. 2 with FIG. 14, the ServiceDetail procedure of the ACD charging communication method according to exemplary embodiments of the present disclosure is described.

In the ServiceDetail procedure, service parameters for AC and DC, ACDS and ACDU, and BPT (bidirectional power transfer) may be defined.

All ACD-specific parameters may be determined in the ACDS_SetupReq and ACDS_SetupRes messages. For example, a ControlMode and a MobilityNeedsMode may be defined.

For example, the EVCC may transmit an "AuthorizationSetupReq (*)" message to the SECC, and the SECC may provide feedback to the EVCC with an "AuthorizationSetupRes (*)" message. Subsequently, the EVCC may transmit an "AuthorizationReq (*)" message to the SECC, and the SECC may provide feedback to the EVCC with an "AuthorizationRes (*)" message.

In the ServiceDiscovery step, the EVCC may transmit a "ServiceDiscoveryReq ( )" message to the SECC, and the SECC may provide feedback to the EVCC with a "ServiceDiscoveryRes (EnergyTransferServiceList=[{ServiceID=14},...])" message.

Referring to the ServiceID table of FIG. 13, when the ServiceID = 11, which is in the message fed back by the SECC to the EVCC, the ServiceName may be interpreted as DC_ACDU_BPT, and when the ServiceID = 14, the ServiceName may be interpreted as DC_ACDS.

The EVCC may request detailed information by referring to the ServiceID information in the feedback message from the SECC. For example, the EVCC may transmit a "ServiceDetailReq (ServiceID=14)" message to the SECC. The SECC may provide feedback to the EVCC with a "ServiceDetailRes (ServiceID=14, ServiceParameterList={ParameterSetID=1, Parameter=...})" message.

At this time, even when the SECC provide feedback with ServiceID=14, the EVCC may request details for ServiceID=14, and the SECC may have provided feedback with ServiceID = 11, but the EVCC may request detailed information on ServiceID = 14 as an alternative.

As described above, service parameters may include information on AC, DC, information on ACDS/U, and information of BPT (Bidirectional Power Transfer) possibility. All ACD-specific parameters may be determined through ADCS/U_SetupReq/Res messages.

An ACD ServiceSelection procedure, an ACD DC_ChargeParameterDiscovery procedure, and an ACD ScheduleExchange procedure of the ACD charging communication method that may be adopted for the ACD charging communication according to exemplary embodiments of the present disclosure are initiated.

In this case, in messages such as ServiceDiscoveryRes, ServiceDetailReq, ServiceDetailRes, ServiceSelectionReq, and ServiceSelectionRes, a ServiceID may be used, and additional information such as an EnergyTransferServiceList and a ServiceParameterList may be used.

For example, the EVCC may transmit a "ServiceSelectionReq (ServiceID=14)" message to the SECC, and the SECC may provide feedback to the EVCC with a "ServiceSelectionRes (SelectedEnergyTransferService {ServiceID=14, ParameterSetID=1})" message.

The EVCC may transmit a "DC_ChargeParameterDiscoveryReq (*)" message to the SECC, and the SECC may provide feedback to the EVCC with a "DC_ChargeParameterDiscoveryRes (*)" message.

The EVCC may transmit a "ScheduleExchangeReq (*)" message to the SECC, and the SECC may provide feedback to the EVCC with a "ScheduleExchangeRes (*)" message.

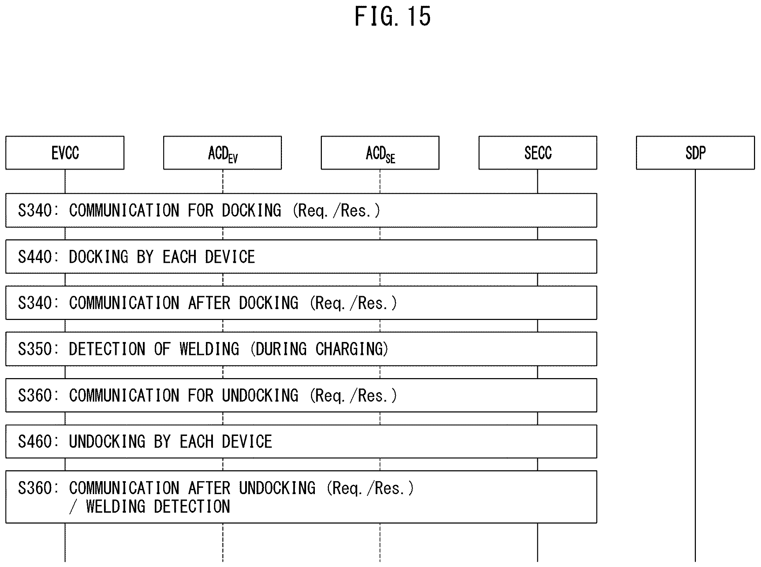

FIG. 15 is a conceptual diagram illustrating a remaining portion of the process of FIG. 2 in more detail according to exemplary embodiments of the present disclosure.

As shown in FIG. 15, an ACD docking procedure (S340, S440) and an ACD post-docking procedure (S340 and subsequent), which are applicable to the ACD charging communication method according to embodiments of the present disclosure, are illustrated.

A welding detection process during charging is illustrated as part of the charging session (S350), an undocking (S360, S460) process and post-undocking S360 process are also illustrated.

For convenience of explanation, the following message flow assumes an ACDS-type implementation as an example. However, the concept of the present disclosure may also be applied to other types of ACD, such as ACDU or ACDP.

For example, in the docking request and docking response (S340) of ACDS, the docking may be performed by a robotic manipulator/robotic arm of the ACD or a robotic manipulator/robotic arm of the EV (S440). The docking procedure may also be performed using other technologies including manual operations by a person or automatic/semi-automatic functionalities. The docking request message or docking response message may include information related to electrical and mechanical status monitoring, docking state/result reporting, and the like.

For example, the EVCC may transmit to the SECC an "ACDS_DockingReq (CPState=A, EVProcessing=Ongoing, EVResult=Unknown)" message, and the SECC may provide feedback to the EVCC with an "ACDS_DockingRes (CPState=A, ManPosition=Home, EVSEProcessing=Ongoing, EVSEResult=Unknown)" message.

After docking is completed, the EVCC may transmit to the SECC an "ACDS_DockingReq (EVProcessing=Finished, EVResult=Success)" message, and the SECC may provide feedback to the EVCC with an "ACDS_DockingRes (EVSEProcessing=Finished, EVSEResult=Success)" message.

After docking, the EVCC and SECC may perform procedures such as Cable Check, PreCharge, Power Delivery, and Charge Loop (S340).

For example, a Cable Check may be performed by the EVCC transmitting a "DC_CableCheckReq (*)" message to the SECC and the SECC providing feedingback to the EVCC with a "DC_CableCheckRes (*)" message. A PreCharge may be performed by the EVCC transmitting a "DC_PreChargeReq (*)" message to the SECC and receiving a "DC_PreChargeRes (*)" message from the SECC. The preparation for charging may be performed by the EVCC transmitting a "PowerDeliveryReq (Start)" message to the SECC and the SECC providing feedback to the EVCC with a "PowerDeliveryRes (*)" message.

Then, the EVCC and the SECC may respectively transmit "MotionFollow(Start)" messages to the ACD_EV and the ACD_SE to perform bilateral ACD motion control.

Then, the EVCC may transmit a "DC_ChargeLoopReq(*)" message to the SECC to check the charge loop state on both the EV and EVSE sides, and the charge loop state may be reported/shared from the SECC to the EVCC.

The ACD_EV and ACD_SE may respectively transmit "Charging-Status( )" messages to the EVCC and SECC, such that the charge loop state of both ACDs is reported to the EVCC and SECC.

When a predetermined condition related to the charge loop state is met, the SECC may provide feedback to the EVCC with a "DC_ChargeLoopRes(*)" message.

The EVCC may transmit a "PowerDeliveryReq (Stop)" message to the SECC, and the SECC may provide feedback to the EVCC with a "PowerDeliveryRes ( )" message to terminate power delivery.

The EVCC and the SECC may respectively transmit "MotionFollow(Stop)" messages to the ACD_EV and the ACD_SE so that the ACD motion control on both sides may be coordinated to match the end of the charging mode, and the motion control may also be terminated accordingly.

The welding detection and post-welding detection procedures applicable to the ACD charging communication method according to embodiments of the present disclosure are illustrated (S350, S360, S460).

For example, in the undocking request and undocking response (S360) of ACDS, the undocking may be performed by a robotic manipulator of the ACD or a robotic manipulator of the EV (S460). The undocking procedure may also be performed using other technologies including manual operations by a person. The undocking request message or undocking response message may include information related to electrical and mechanical status monitoring, undocking result reporting, and the like.

During the charging process, the EVCC may transmit a "DC_WeldingDetectionReq (*)" message to the SECC, and the SECC may provide feedback to the EVCC with a "DC_WeldingDetectionRes (*)" message. This message may imply that charging is still ongoing. This process may be repeated under predetermined conditions while charging continues.

In case that the EVCC transmits a "DC_WeldingDetectionReq (*)" message to the SECC and receives a "DC_WeldingDetectionRes (*)" message from the SECC, it may be determined that the charging is completed.

To perform undocking after the charging is completed, the EVCC may transmit to the SECC an "ACDS_UndockingReq (CPState=A, EVProcessing=Ongoing, EVResult=Unknown)" message, and the SECC may provide feedback to the EVCC with an "ACDS_UndockingRes (CPState=A, ManPosition=Home, EVSEProcessing=Ongoing, EVSEResult=Unknown)" message.

When undocking is completed, the EVCC may transmit to the SECC an "ACDS_UndockingReq (EVProcessing=Finished, EVResult=Success)" message, and the SECC may provide feedback to the EVCC with an "ACDS_UndockingRes (EVSEProcessing=Finished, EVSEResult=Success)" message.

When both the EVCC and SECC share the information that the undocking is finished and the result is success, the EVCC may transmit to the SECC a "SessionStopReq (ChargingSession=Terminate)" message, and the SECC may provide feedback to the EVCC with a "SessionStopRes (OK)" message to terminate the session between the EVCC and SECC.

The EVCC and SECC may respectively transmit a "Finish( )" message to the ACD_EV and ACD_SE to terminate the entire charging session for both ACDs.

Although not illustrated in the drawings of the embodiments of FIGS. 1 through 15, information regarding the docking or mating state may further include detailed state information regarding covers or inlets of both ACDs. The state information may also include fine movements during charging or an unmated state during charging.

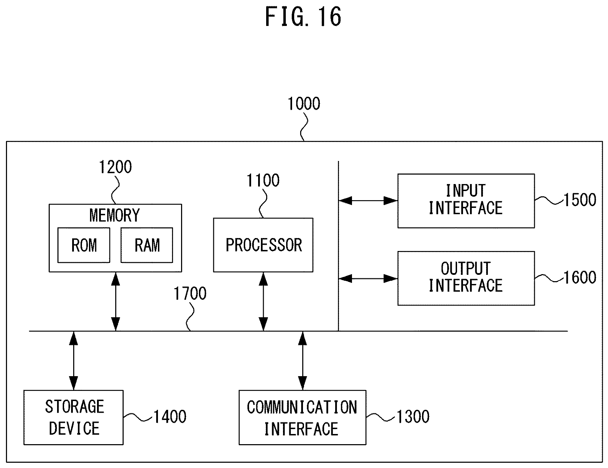

FIG. 16 is a conceptual block diagram illustrating an internal structure of a computing system that may implement a generalized ACD, a communication/communication control device included in the ACD, an SECC, an EVCC, a wireless LAN access point (AP) deployed for the EVSE, and a short-range communication device deployed in the electric vehicle or the ACD, as a charging communication apparatus for an ACD according to exemplary embodiments of the present disclosure.

Although not illustrated in the drawings of FIGS. 1 to 15, a processor and a memory may be electronically connected to each component, and the operation of each component may be controlled or managed by the processor.

At least a part of the method for charging communication for an electric vehicle according to embodiments of the present disclosure may be executed by the computing system 1000 of FIG. 16.

As shown in FIG. 16, the computing system 1000 according to embodiments of present disclosure may include a processor 1100, a memory 1200, a communication interface 1300, a storage device 1400, an input interface 1500, an output interface 1600, and a bus 1700.

The computing system 1000 according to embodiments of the present disclosure may include at least one processor 1100 and a memory 1200 that stores instructions for the processor 1100 to perform at least one step. At least some of the steps of the method according to embodiments of the present disclosure may be performed by the processor 1100 loading and executing the instructions from the memory 1200.

The processor 1100 may refer to a central processing unit (CPU), a graphics processing unit (GPU), or a dedicated processor on which the method according to embodiments of the present disclosure is executed.

Each of the memory 1200 and the storage device 1400 may include at least one of a volatile and a non-volatile storage medium. For example, the memory 1200 may include at least one of a read-only memory (ROM) and a random access memory (RAM).

Additionally, the computing system 1000 may include a communication interface 1300 for performing communication via a wireless network.

Furthermore, the computing system 1000 may further include a storage device 1400, an input interface 1500, an output interface 1600, etc.

The respective components included in the computing system 1000 may be connected to each other via a bus 1700, thereby enabling mutual communication.

A device including the processor 1100 according to embodiments of the present disclosure may be, for example, a communicable desktop computer, a laptop computer, a notebook, a smartphone, a tablet PC, a mobile phone, a smart watch, a smart glass, an e-book reader, a portable multimedia player (PMP), a handheld game console, a navigation device, a digital camera, a digital multimedia broadcasting (DMB) player, a digital audio recorder, a digital audio player, a digital video recorder, a digital video player, a personal digital assistant (PDA), or the like.

An electric vehicle communication controller (EVCC) according to embodiments of the present disclosure, disposed in or mounted on an electric vehicle and associated with a secondary assembly that receives power from a primary assembly, may include a processor 1100 configured to receive and execute at least one instruction from the memory 1200.

The processor 1100 of the EVCC may be configured to discover a first electric vehicle supply equipment (EVSE) within a range using a first communication technology, obtain information for positioning the electric mobility to a charging position/location for being supplied with power from the first EVSE using the first communication technology, and establish (or perform) a communication connection (or communication channel or communication link) with a supply equipment communication controller (SECC) of the first EVSE using a second communication technology.

When discovering a first EVSE, the processor 1100 may broadcast a probe request message using the first communication technology, and receive at least one probe response message from one or more EVSEs within range using the first communication technology.

The processor 1100 may be configured to measure at least one distance from the electric mobility to each of the at least one EVSE within the range based on the received probe response message, and select the first EVSE closest to the electric mobility based on the at least one measured distance.

The processor 1100 may transmit a connection request message to the discovered first EVSE using the first communication technology, and receive a corresponding connection response message from the first EVSE using the first communication technology.

When obtaining the information for positioning the electric mobility to the charging position/location, the processor 1100 may measure at least one distance to each of a plurality of localization anchors associated with the first EVSE, and precisely measure the distance and direction between a charging port of the first EVSE and a charging port inlet of the electric mobility based on the at least one measured distance.

A supply equipment communication controller (SECC) according to embodiments of the present disclosure, associated with a primary assembly that supplies electric power to the electric mobility, may include a processor 1100 configured to receive and execute at least one instruction from a memory.

The processor 1100 of the SECC may receive a probe request message broadcasted from the electric mobility using the first communication technology, transmit a probe response message to the electric mobility in response using the first communication technology, provide information for positioning the electric mobility to a charging position/location for being supplied with power from the primary assembly, and establish (or perform) a communication connection (or communication channel or communication link) for the charging process with the electric mobility using a second communication technology.

Meanwhile, in most of the aforementioned embodiments, requests, messages, or parameters that initiate a communication protocol or communication session within the protocol are first transmitted from the electric vehicle or EVCC to the EVSE/SECC/ACD. However, the present disclosure is not limited to such embodiments and may be implemented such that the requests, the messages, or the parameters are first transmitted from the EVSE/SECC/ACD to the electric vehicle or EVCC. In such a case, it is self-evident that the sender and receiver are merely switched while maintaining the same functional characteristics.

The operations of the method according to embodiments of the present disclosure may be implemented as a program or code stored in a computer-readable recording medium. The computer-readable recording medium includes any type of recording device in which information may be stored and read by a computer system. The computer-readable recording medium may also be distributed across computer systems connected via a network, and the program or code may be stored and executed in a distributed manner.

The computer-readable recording medium may include hardware devices specifically configured to store and execute program instructions, such as ROM, RAM, and flash memory. The program instructions may include machine code generated by a compiler as well as high-level language code that may be executed by a computer using an interpreter.

Some aspects of the present disclosure have been described in the context of a device, but it should be understood that corresponding method-based descriptions are also applicable, wherein blocks or devices correspond to method steps or features of method steps. Likewise, aspects described in the context of methods may also be represented as corresponding blocks or features of a device. Some or all of the method steps may be performed by (or using) hardware devices such as a microprocessor, programmable computer, or electronic circuit. In certain embodiments, at least one of the key method steps may be performed by such a device.

In some embodiments, a programmable logic device (e.g., a field-programmable gate array (FPGA)) may be used to perform some or all of the functions of the methods described herein. In such embodiments, the FPGA may operate in conjunction with a microprocessor to execute one or more of the methods described herein. In general, it is preferable that the methods be performed by a hardware device.

While the present disclosure has been described with reference to preferred embodiments, it will be understood by those skilled in the art that various modifications and changes may be made without departing from the spirit and scope of the invention as defined in the appended claims.

## Claims

1. A charging communication method for charging an electric mobility, which is performed by an electric vehicle communication controller (EVCC), the charging communication method comprising:
discovering, by the EVCC, a first Electric Vehicle Supply Equipment (EVSE) within a range, using a first communication technology;
obtaining, by the EVCC, information for positioning the electric mobility to a charging position for being supplied with electric power from the first EVSE, using the first communication technology; and
establishing, by the EVCC, a communication connection with a Supply Equipment Communication Controller (SECC) of the first EVSE, using a second communication technology.

2. The charging communication method of claim 1, wherein the discovering of the first EVSE by the EVCC using the first communication technology comprises:
broadcasting, by the EVCC, a probe request message, using the first communication technology; and
receiving, by the EVCC, at least one probe response message transmitted from at least one EVSE within the range, using the first communication technology.

3. The charging communication method of claim 2, wherein the discovering of the first EVSE by the EVCC using the first communication technology further comprises:
measuring, by the EVCC, at least one distance to each of the at least one EVSE within the range, based on the probe response message; and
selecting the first EVSE that is closest to the electric mobility from among the at least one EVSE within the range, based on the at least one measured distance.

4. The charging communication method of claim 1, further comprising:
transmitting a connection request message to the discovered first EVSE, using the first communication technology; and
receiving a connection response message corresponding to the connection request message from the first EVSE, using the first communication technology.

5. The charging communication method of claim 4, wherein the connection request message comprises location information of an inlet of the electric mobility, and
the connection response message comprises mating space information of the first EVSE or localization parameters of the first EVSE.

6. The charging communication method of claim 1, further comprising:
fine positioning the electric mobility to a charging position to be mated with the first EVSE.

7. The charging communication method of claim 1, wherein the obtaining of the information for positioning the electric mobility to the charging position comprises:
measuring distances to each of a plurality of localization anchors associated with the first EVSE; and
precisely measuring a distance and a direction between a charging port of the first EVSE and a charging port inlet of the electric mobility based on the distances to the plurality of localization anchors.

8. The charging communication method of claim 1, after obtaining the information for positioning the electric mobility to the charging position, further comprising:
transmitting, by the EVCC, a pairing request message to the first EVSE; and
receiving a pairing response message from the first EVSE.

9. The charging communication method of claim 8, wherein the pairing request message comprises EVMAC information of the electric mobility or identification information of the EVCC, and
the pairing response message comprises a channel number (CH#) of a wireless LAN access point (AP), basic service set identification (BSSID), or identification information of the EVSE (EVSEID).

10. The charging communication method of claim 1, wherein the first communication technology is one of UWB, RFID, NFC, or IrDA, and
identification information obtained through a pairing process performed with the discovered first EVSE using the first communication technology is delivered to a wireless communication layer using the second communication technology.

11. An electric vehicle communication controller (EVCC), which is disposed in an electric mobility and associated with a secondary assembly that receives power from a primary assembly, the EVCC comprising:
a processor configured to execute at least one instruction, wherein the processor is configured to:
discover, a first electric vehicle supply equipment (EVSE) within a range, using a first communication technology;
obtain, information for positioning the electric mobility to a charging position for being supplied with power from the first EVSE, using the first communication technology; and
establish, a communication connection with a supply equipment communication controller (SECC) of the first EVSE, using a second communication technology.

12. The electric vehicle communication controller (EVCC) of claim 11, wherein, when discovering the first EVSE using the first communication technology,
the processor is further configured to broadcast a probe request message using the first communication technology, and receive at least one probe response message transmitted from at least one EVSE within the range, using the first communication technology.

13. The electric vehicle communication controller (EVCC) of claim 12, wherein the processor is further configured to:
measure, at least one distance from the electric mobility to each of the at least one EVSE within range, based on the probe response message; and
select, the first EVSE that is closest to the electric mobility from among the at least one EVSE within the range, based on the at least one measured distance.

14. The electric vehicle communication controller (EVCC) of claim 11, wherein the processor is further configured to:
transmit a connection request message to the discovered first EVSE using the first communication technology; and
receive, a connection response message corresponding to the connection request message from the first EVSE, using the first communication technology.

15. The electric vehicle communication controller (EVCC) of claim 11, wherein, when obtaining the information for positioning the electric mobility to the charging position, the processor is further configured to
measure distances to each of a plurality of localization anchors associated with the first EVSE, and
precisely measure a distance and a direction between a charging port of the first EVSE and a charging port inlet of the electric mobility, based on the distances to the plurality of localization anchors.

16. A charging communication method performed by a supply equipment communication controller (SECC) associated with a primary assembly that transmits power to an electric mobility, the charging communication method comprising:
receiving a probe request message broadcast using a first communication technology from the electric mobility;
transmitting a probe response message to the electric mobility in response to the probe request message, using the first communication technology;
providing information for positioning the electric mobility to a charging position for being supplied with power from the primary assembly to the electric mobility, using the first communication technology; and
establishing a communication connection with the electric mobility to engage in a charging process, using a second communication technology.

17. The charging communication method of claim 16, further comprising:
receiving a connection request message including location information of an inlet of the electric mobility from the electric mobility, using the first communication technology; and
transmitting a connection response message including mating space information of the primary assembly or localization parameters associated with the primary assembly to the electric mobility, using the first communication technology.

18. The charging communication method of claim 16, wherein the providing of the information for positioning the electric mobility to the charging position comprises:
providing location information of each of a plurality of localization anchors associated with the primary assembly to the electric mobility to enable the electric mobility to obtain fine positioning information to reach the charging position capable of mating.

19. The charging communication method of claim 16, after the electric mobility is positioned at the charging position, further comprising:
performing, using the first communication technology, a pairing process between the electric mobility and the primary assembly based on identification information of the electric mobility, service identification information associated with the primary assembly, or communication service identification information of the primary assembly using the second communication technology.

20. The charging communication method of claim 19, wherein the first communication technology is one of UWB, RFID, NFC, or IrDA, and
the establishing of the communication connection with the electric mobility to engage in a charging process, using a second communication technology is performed based on identification information obtained through the pairing process using the first communication technology.
